# EUROPÄISCHE PATENTSCHRIFT

(11) **EP 0 566 988 B1**
(45) Veröffentlichungstag und Bekanntmachung des Hinweises auf die Patenterteilung: **18.09.1996**
(21) Anmeldenummer: 93106131.1
(22) Anmeldetag: 15.04.1993
(51) Int. Cl.: C08L 53/00, C08L 65/00, C08F 232/00, C08F 297/08

(54) **Polymerlegierungen aus Cycloolefinpolymeren und Polyolefinen**
Polymer blends of cycloolefin polymers and polyolefines
Composition de polymères de cyclooléfines et polyoléfines

(30) Priorität: 22.04.1992 DE 4213219; 05.12.1992 DE 4241001
(43) Veröffentlichungstag der Anmeldung: 27.10.1993
(73) Patentinhaber: HOECHST AKTIENGESELLSCHAFT, 65926 Frankfurt am Main (DE)
(72) Erfinder: Epple, Ulrich, Dr., W-6236 Eschborn (DE); Brekner, Michael-Joachim, Dr., W-6000 Frankfurt am Main 71 (DE)

(56) Entgegenhaltungen:
- EP-A- 0 433 986
- DD-A- 214 137
- DD-A- 214 623
- DE-A- 3 835 044
- DATABASE WPIL Derwent Publications Ltd., London, GB; AN 90-378705

## Beschreibung

Cycloolefinpolymere sind eine Polymerklasse mit herausragendem Eigenschaftsniveau. Sie zeichnen sich u. a. durch z. T. hohe Wärmeformbeständigkeit, Transparenz, hydrolytische Stabilität, geringe Wasseraufnahme, Witterungsbeständigkeit und hohe Steifigkeit aus. Sie sind harte und spröde Thermoplaste.

Es ist bekannt, daß Cycloolefine mittels verschiedener Katalysatoren polymerisiert werden können. Dabei verläuft die Polymerisation in Abhängigkeit vom Katalysator über Ringöffnung (US-A-3 557 072, US-A-4 178 424) oder unter Öffnung der Doppelbindung (EP-A-156 464, EP-A-283 164, EP-A-291 208, EP-A-291 970, DE-A-3 922 546).

Cycloolefinpolymere besitzen eine ungenügende Resistenz gegenüber Schlag- und Stoßbeanspruchung. Allgemein bekannt ist, daß die Resistenz gegenüber Schlag- und Stoßbeanspruchung bei Polyolefinen wie z.B. Polyethylen, Polypropylen und Polybuten-1 gut ist. Diese Polyolefine besitzen jedoch eine limitierte Wärmeformbeständigkeit, geringe Festigkeit, einen niedrigen Modul und geringe Härte.

Bekannt ist, daß 1-Olefine, wie Ethylen und Propylen mittels verschiedener Katalysatoren zu Polyolefinen, insbesondere Polyethylenen und Polypropylenen polymerisiert werden können (DE 3 620 060, EP 399 348, EP 086 644, EP 185 918, EP 387 690).

Polyethylen kann auch durch radikalische Polymerisation hergestellt werden (US 3 336 281). Es handelt sich dann um ein Material geringer Dichte (LDPE), im Vergleich zu Material, das katalytisch hergestellt wurde und hohe bis mittlere Dichte aufweist (HDPE, MDPE). Das gleiche gilt für Copolymere von Ethylen mit 1-Olefinen (LLDPE).

Allgemein bekannt ist, daß wichtige Eigenschaften von Polymeren, wie die obengenannten verändert werden können, in dem man Polymere mit anderen Polymeren legiert. So werden in den Patentschriften DD 214 137 und DD 214 623 thermoplastische Konstruktionswerkstoffe auf Basis von Polyolefinen beschrieben, die gleichzeitig gute Wärmeformbeständigkeit, Chemikalienbeständigkeit, Steifheit, Zähigkeit und sehr gute dielektrische Eigenschaften besitzen. Sie enthalten als wesentliche Bestandteile Norbornen-Ethylen-Copolymere und Polyethylen oder verzweigte Polyolefine, gegebenenfalls unter Zusatz von Stabilisatoren, Gleitmitteln, Elasten, Thermoplasten und Verstärkerstoffen. Zur Verbesserung der Schlagzähigkeit und Kerbschlagzähigkeit werden Elaste wie z.B. elastomere Ethylen-Co- und -Terpolymere bzw. Pfropfcopolymere zugesetzt. Als Elaste werden jedoch keine blockartigen Co- oder Terpolymere aus Ethylen oder 1-Olefinen und Cycloolefinen erwähnt.

Die Zusätze von Polyethylen oder verzweigten Polyolefinen zu Ethylen-Norbornen-Copolymeren bewirken nach diesen Dokumenten eine Verbesserung der Chemikalienbeständigkeit und der Zähigkeit des Norbornen-Ethylen-Copolymeren. Umgekehrt fuhrte der Zusatz von Norbornen-Ethylen-Copolymeren zu Polyethylen oder verzweigten Polyolefinen zu einer Erhöhung der Festigkeit, des Moduls und der Härte, ohne daß ein Abfall der Schlagzähigbiegefestigkeit erfolgte.

Weiterhin bekannt ist, daß Polyolefinthermoplastkombinationen aus 40 - 98 Gew.-% kristallinem Polyolefin und 2 - 60 Gew.-% statistischem cyclischen olefinischen Copolymer (Tg 70 bis 210 °C, Kristallinität 0 bis 5 %) gute Wärmeformbeständigkeit und Rißbeständigkeit sowie geringen Schrumpf aufweisen (JP 1 318 052). Cycloolefinpolymerkombinationen aus Polymeren des cyclischen Olefins und kristallinen Polyolefinen zeigen laut japanischer Patentanmeldung JP 3 122 148 verbesserte Schmelzverarbeitbarkeit.

Eine Thermoplastkombination aus 5 bis 90 Gew.-% linearem Polyolefin {bestehend aus 8 bis 40 % ultrahochmolekularem Polyolefin (η 10 bis 40 dl/g) und 60 bis 92 % gering bis hochmolekularem Polyolefin (η 0,1 bis 5,0 dl/g)} und 95 bis 10 Gew.-% mindestens eines Cycloolefinthermoplasten, ausgewählt aus ringöffnenden Polymeren und ringöffnenden Copolymeren wird in US-PS 4 990 559 beschrieben.

Ein Legieren von Cycloolefincopolymeren mit Polyolefinen, wie Polyethylen, Polypropylen, Polybuten-1, Polyhexen-1, Poly-4-methyl-penten-1 u.a. ist attraktiv, weil solche Polyolefine relativ billig sind und die entsprechenden Legierungen dann auch Kostenvorteile bieten. Es ist nun wichtig, unter Ausnutzen der Kostenvorteile eine möglichst günstige Eigenschaftskombination in der Legierung zu realisieren. Solche Legierungen kommen hauptsächlich für Anwendungen in Betracht, wo gute Werkstoffeigenschaften gefragt sind.

Aufgabe war es nun, ein Verfahren anzugeben, bei dem man ausgehend von günstigen Kombinationen zwischen Cycloolefinpolymeren, Polyolefinen und Zusatzstoffen zu Polymerlegierungen gelangt, die ein möglichst hohes Niveau der Werkstoffeigenschaften, insbesondere Festigkeit, Härte, Wärmeformbeständigkeit und Zähigkeit aufweisen.

Ferner bestand die Aufgabe, ausgehend von den Einzelkomponenten Polyolefine oder Cycloolefinpolymere (einschließlich Cycloolefincopolymere) durch Zusätze zu Legierungen mit guten Werkstoffeigenschaften zu gelangen.

Diese Aufgabe wird gelöst durch die Merkmale von Anspruch 1.

Die eingesetzten Polyolefine leiten sich von offenkettigen nicht cyclischen Olefinen ab, beispielsweise von Ethylen, Propylen, Buten-1, Hexen-1, 4-Methyl-penten-1, Isobutylen, Isopren oder Butadien. Neben Polyisopren und Polybutadien sind auch elastomere Butadienco- und -terpolymere und/oder deren Pfropfcopolymere sowie elastomere Polyolefinco- und -terpolymere und/oder deren Pfropfcopolymere einsetzbar. Vorzugsweise leiten sich die Polyolefine ab von 1-Olefinen, wobei auch Styrole und/oder deren Co- und Terpolymere sowie Pfropfcopolymere dieser hierunter fallen. Bevorzugte Polyolefine enthalten aliphatische 1-Olefine, insbesondere mit 2 bis 8 C-Atomen, z. B. Ethylen, Propylen, Buten-1, Hexen-1, 4-Methyl-penten-1 und Okten-1. Besonders bevorzugt sind 1-Olefine mit 2 - 6 C-Atomen wie Ethylen, Propylen, Buten-1, Hexen-1 und 4-Methyl-penten-1. Einsetzbare Polyolefine sind insbesondere auch Co- und Terpolymere verschiedener 1-Olefine, die auch cyclische Olefine enthaiten können, z. B. von Ethylen, Propylen, Hexadien, Dicyclopentadien und Ethylidennorbornen. Besonders bevorzugte Polyolefine sind Polyethylen und Polypropylen.

Ein Verfahren zur Herstellung eines geeigneten feinteiligen Blockcopolymeren ist Gegenstand der nicht vorveröffentlichten deutschen Patentanmeldung P 42 05 416.8, auf die hiermit ausdrücklich verwiesen wird. Die dort beschriebenen Blockcopolymeren, die als Zusatzstoffe in den erfindungsgemäß hergestellten Legierungen enthalten sind, bestehen aus mindestens zwei Blöcken mit unterschiedlichem Gehalt an Olefinen, wobei ein Olefin sich ableitet von Norbornen und mindestens ein Olefin ein Cycloolefin CₙH₂ₙ₋₂ mit n = 4 bis 13 oder ein acyclisches Olefin ist. Als Verunreinigungen bei den Blockcopolymeren können auch entsprechende Homopolymere entstehen. Im allgemeinen besitzen unterschiedliche Blöcke eines Blockcopolymeren auch unterschiedliche Glastemperaturen. Bei Diblockcopolymeren wird als "Weichblock" der Block mit der niedrigen Glastemperatur und als ''Hartblock'' der Block mit der höheren Glastemperatur bezeichnet.

Die nach dem erfindungsgemäßen Verfahren hergestellten Polymerlegierungen mit diesen Blockcopolymeren weisen überraschenderweise hervorragende mechanische Eigenschaften auf. Ihre Zähigkeit ist in allen Fällen besser als bei reinen Cycloolefinpolymeren und ihre Festigkeit, ihre Härte und ihr Modul sind zum Teil höher als bei reinen Polyolefinen. Gegenüber den in den DD 214 137 und DD 214 623 beschriebenen Legierungen ohne diese Blockcopolymeren zeichnen sich die erfindungsgemäß hergestellten Legierungen durch ihre erhöhte Schmelzviskosität, ihre höhere Reißdehnung und ihre besseren Schlagzähigkeit aus.

Die nach dem erfindungsgemäßen Verfahren gewonnenen Polymerlegierungen enthalten 0,1 - 99 Gew.-Teile mindestens eines Blockcopolymeren (C), 0 - 95 Gew.-Teile Cycloolefinpolymer oder -polymere (A) und 0 - 95 Gew.-Teile Polyolefin oder -olefine (B), wobei die Summe aus (A) + (B) + (C) 100 Gew.-Teile ergibt. Ferner können an sich bekannte Additive, wie z.B. Füllstoffe oder Farbstoffe eingearbeitet werden. Bei erhöhter Temperatur Kann inter Einwirkung von Scherkräflur die Rischung zu einer Legierung verarbeitet werden.

Vorzugs halber werden
1-55 Gew.-Teile mindestens eines Blockpolymeren
10-80 Gew.-Teile Polyolefin oder Polydolefine und
   und
10-80 Gew.-Teile Cycloolefinpolymer
vereinigt und verarbeitet, mit der Maßgabe, daß die Summe der Polymere 100 Gew.-Teile beträgt.

Für die Legierungen gemäß der Erfindung geeignete Cycloolefinpolymere (A) enthalten Struktureinheiten, die von mindestens einem Monomeren der Formeln I bis VII 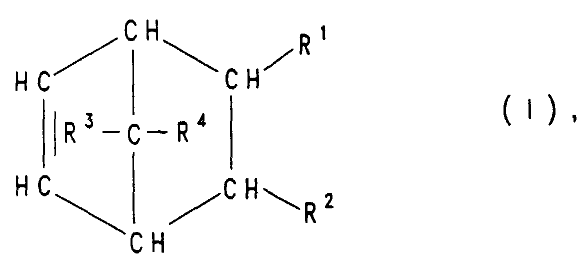 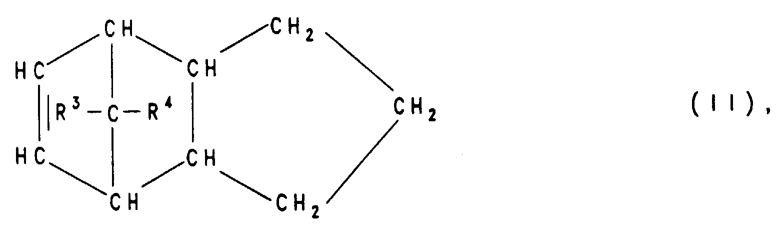 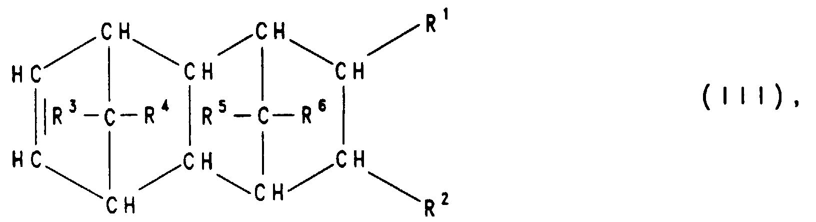 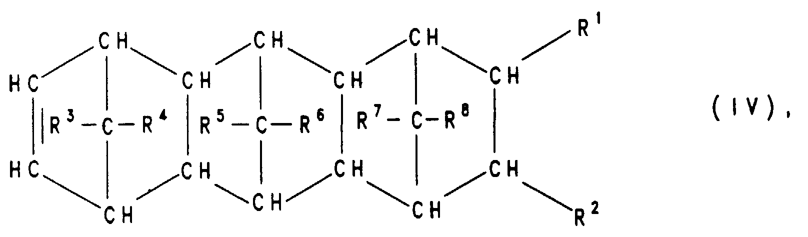 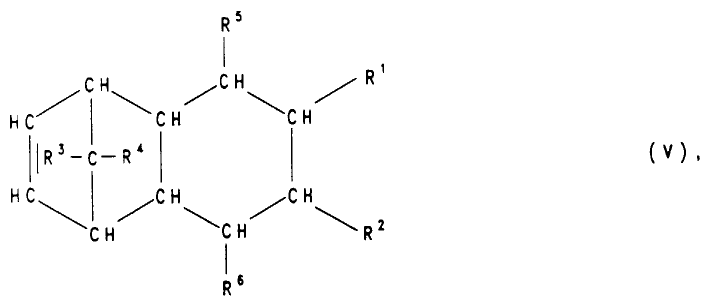 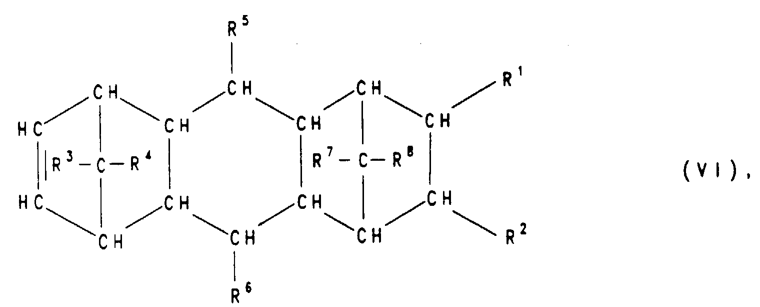 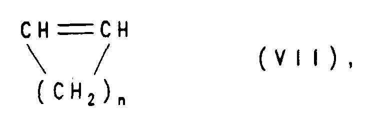 abgeleitet sind, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können und n eine ganze Zahl von 2 bis 10 ist.

Die Cycloolefinpolymere (A) können neben den Struktureinheiten, die von mindestens einem Monomeren der Formeln I bis VII abgeleitet sind, weitere Struktureinheiten enthalten, die von mindestens einem acyclischen 1-Olefin der Formel VIII 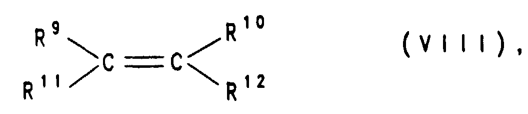 abgeleitet sind, worin R⁹, R¹⁰, R¹¹ und R¹² gleich oder verschieden sind und ein Wasserstoffatom oder einen C₁-C₈-Alkylrest bedeuten.

Bevorzugte Comonomere sind Ethylen oder Propylen. Es werden insbesondere Copolymere aus polycyclische Olefinen der Formeln I oder III, und den acyclischen Olefinen der Formeln VIII, eingesetzt. Besonders bevorzugte Cycloolefine sind Norbornen und Tetracyclododecen, die durch C₁-C₆-Alkyl substituiert sein können, wobei Ethylen-Norbornen-Copolymere von besonderer Bedeutung sind. Von den monocyclischen Olefinen der Formel VII ist Cyclopenten, das substituiert sein kann, bevorzugt. Als polycyclische Olefine, monocyclische Olefine und offenkettige Olefine sind auch Gemische zweier oder mehrerer Olefine des jeweiligen Typs zu verstehen. Das heißt, es können Cycloolefinhomopolymere und -Copolymere wie Bi-, Ter- und Multipolymere eingesetzt werden.

Die unter Öffnung der Doppelbindung verlaufenden Cycloolefinpolymerisationen können mit neueren Katalysatorsystemen (EP-A-0 407 870, EP-A-0 203 799), als auch mit einem klassischen Ziegler-Katalysatorsystem katalysiert werden (DD-A-222 317).

Cycloolefinhomo- und copolymere, die Struktureinheiten abgeleitet von Monomeren der Formeln I bis VI oder VII enthalten, werden bevorzugt mit Hilfe eines homogenen Katalysators hergestellt. Dieser besteht aus einem Metallocen, dessen Zentralatom ein Metall aus der Gruppe Titan, Zirkon, Hafnium, Vanadium, Niob und Tantal ist, welches mit zwei miteinander verbrückten ein- oder mehrkernigen Liganden eine Sandwichstruktur bildet, und einem Aluminoxan. Die Darstellung der verbrückten Metallocene erfolgt nach einem bekannten Reaktionsschema (vgl. J. Organomet. Chem. 288 (1985) 63 - 67, EP-A-387 690). Das als Cokatalysator fungierende Aluminoxan ist nach verschiedenen Methoden erhältlich (vgl. S. Pasynkiewicz, Polyhedron 9 (1990) 429 und EP-A-302 424). Die Struktur als auch die Polymerisation dieser Cycloolefine ist ausführlich in EP-A-0 407 870, EP-A-0 485 893, EP-A-0 501 370 und EP-A-0 503 422 beschrieben. Hierbei handelt es sich um Cycloolefincopolymere, die sich in ihrer chemischen Einheitlichkeit und ihrer Polydispersität unterscheiden.

Bevorzugt werden Cycloolefinpolymere mit einer Viskositätszahl größer 20 cm³/g (gemessen in Dekalin bei 135 °C in einer Konzentration von 0,1 g/100 ml) und einer Glastemperatur (Tg) zwischen 100 und 240°C eingesetzt.

Die Legierungen können auch Cycloolefinpolymere enthalten, die unter Ringöffnung in Gegenwart beispielsweise von wolfram-, molybdän, rhodium- oder rheniumhaltigen Katalysatoren polymerisiert wurden. Die dabei erhaltenen Cycloolefinpolymere besitzen Doppelbindungen, die durch Hydrierung entfernt werden können (US-A-3 557 072 und US-A-4 178 424).

Die in den erfindungsgemäß hergestellten Legierungen enthaltenden Cycloolefinblockcopolymere (C) werden aus einem Monomergemisch enthaltend ein oder mehrere Cycloolefine der Formeln I bis VI, insbesondere der Formeln I oder III, und mindestens einem Olefin ausgewählt aus der Gruppe der Cycloolefine der Formel VII und der acyclischen Olefine der Formel VIII gebildet.

Dabei sind solche Verbindungen der Formeln I und III, in denen die Rest R¹ bis R⁶ Wasserstoff oder einen C₁- bis C₆-Alkylrest bedeuten, und Verbindungen der Formel VIII, in denen R⁹, R¹⁰ und R¹¹ Wasserstoff bedeutet, (insbesondere Ethylen und Propylen) bevorzugt.

Nach dem Verfahren der deutschen Patentanmeldung P 42 05 416.8 werden zur Herstellung des Cycloolefinblockcopolymers 0,1 bis 95 Gew.-%, bezogen auf die Gesamtmenge der eingesetzten Monomeren, mindestens eines Monomers der Formeln I, II, III, IV, V oder VI 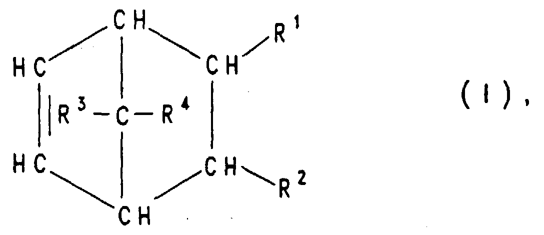 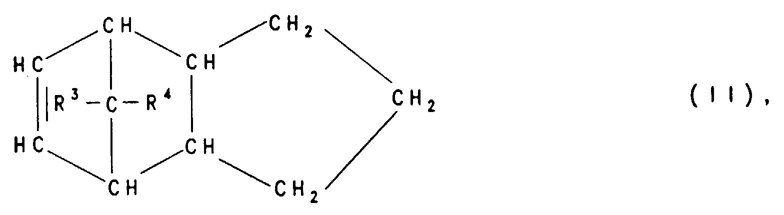 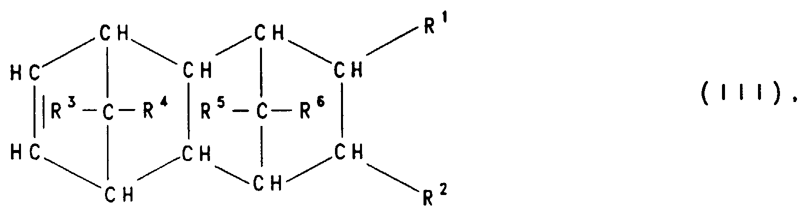 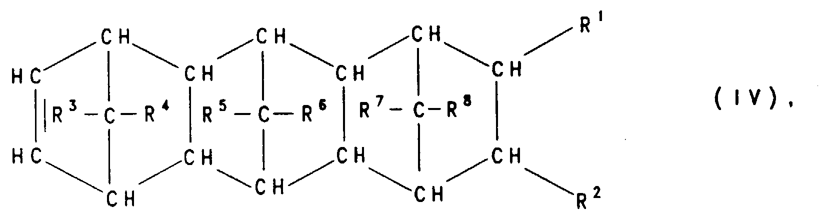 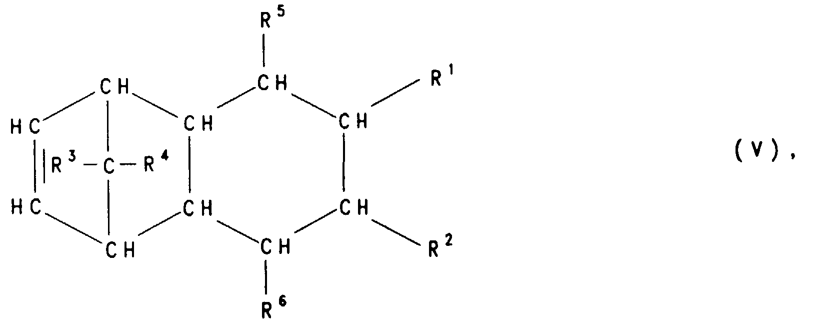 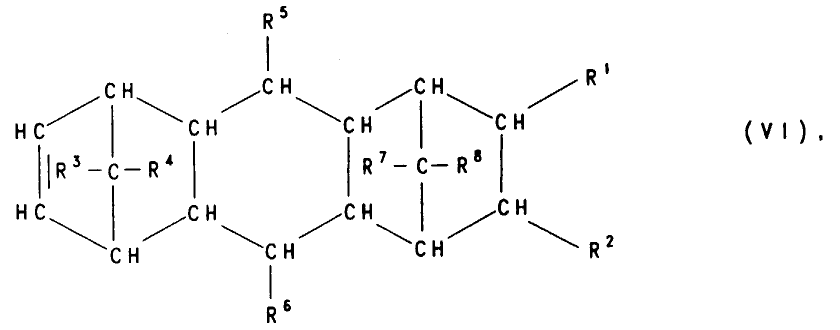 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 95 Gew.-%, bezogen auf die Gesamtmenge der eingesetzten Monomeren, eines Cycloolefins der Formel VII 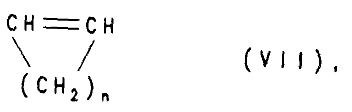 worin n eine Zahl von 2 bis 10 ist, und
0 bis 99 Gew.-%, bezogen auf die Gesamtmenge der eingesetzten Monomeren, mindestens eines acyclischen Olefins der Formel VIII 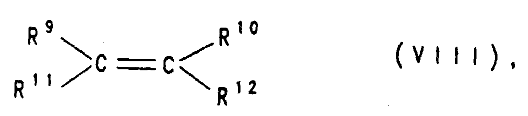 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Cokatalysator und einem Metallocen der Formel XI 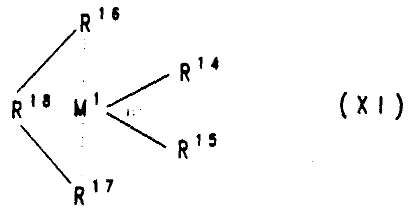 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹⁶ und R¹⁷: einen ein- oder mehrkernigen Kohlenwasserstoffrest, welcher mit dem Zentralatom M¹ eine Sandwichstruktur bilden kann, bedeuten,
- R¹⁸: 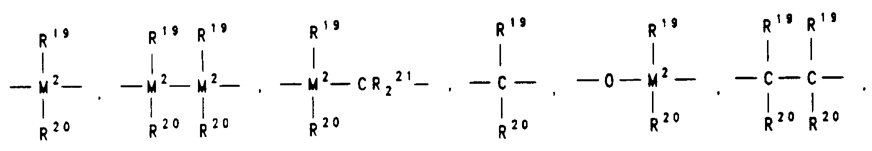 = BR¹⁹, = AIR¹⁹, -Ge-, -Sn-, -O-, -S-, = SO, =SO₂, = NR¹⁹, = CO, = PR¹⁹, oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist, polymerisiert. Dabei werden jeweils bei einer Molekulargewichtsverteilung M_{w}/Mₙ kleiner 2, immer bezogen auf den sich bildenden Polymerblock, die Reaktionsbedingungen derart verändert, daß sich das Monomer-Comonomer-Verhältnis um mindestens 10 % verändert oder es wird zu dem Monomer oder den Monomeren ein weiteres polymerisierbares Monomer der Formeln I - VIII zudosiert.

Die Polymerisation wird so durchgeführt, daß je nach der Anzahl der durchgeführten Veränderungen der Parameter oder der Monomerzusammensetzung eine zwei- oder mehrstufige Polymerisation stattfindet, wobei in der ersten Polymerisationsstufe auch eine Homopolymersequenz aus einem der Monomeren der Formeln I bis VIII polymerisiert werden kann. Dabei steht Alkyl für geradkettiges oder verzweigtes Alkyl. Das monocyclische Olefin VII kann auch substituiert sein (z. B. durch Alkyl- oder Arylreste).

Die Polymerisation findet in verdünnter Lösung (<80 Vol.-% Cycloolefin), in konzentrierter Lösung (>80 Vol.-% Cycloolefin) oder direkt im flüssigen unverdünnten Cycloolefinmonomer statt.

Je nach der Aktivität des Katalysators, dem gewünschten Molekulargewicht und der gewünschten Molekulargewichtsverteilung des jeweiligen Polymerblocks müssen Temperatur und Reaktionszeit entsprechend abgestimmt werden. Auch die Konzentration der Monomeren wie auch die Art des Lösungsmittels müssen dabei berücksichtigt werden, zumal diese Parameter wesentlich die relativen Einbauraten der Monomeren bestimmen und somit entscheidend für Glastemperatur bzw. thermische Formbeständigkeit der Polymere sind.

Je tiefer die Polymerisationstemperatur innerhalb des Bereiches von -78 bis 150°C gewählt wird, vorzugsweise zwischen -78 und 80°C und besonders bevorzugt zwischen 20 und 80°C, um so länger kann die Polymerisationsdauer bei nahezu gleicher Breite der Molekulargewichtsverteilung M_{w}/Mₙ für die jeweiligen Polymerblöcke sein.

Findet die plötzliche Veränderung der Reaktionsbedingungen zu einem Zeitpunkt statt, bei dem die Molekulargewichtsverteilung M_{w}/Mₙ des sich bildenden Polymerblocks gleich 1 ist, so kann mit Sicherheit davon ausgegangen werden, daß alle in dieser Polymerisationsstufe gebildeten Polymerblöcke ein katalysator-aktives Kettenende besitzen (d.h. es sind sogenannte lebende Polymerketten) und somit durch Veränderung der Polymerisationsbedingungen ein weiterer Block an diese Kettenenden anpolymerisiert werden kann. Die Ankopplung ist für diesen extremen Fall 100 %. Je mehr die Molekulargewichtsverteilung M_{w}/Mₙ der in einer Polymerisationsstufe gebildeten Polymerblöcke von 1 abweicht, d.h. M_{w}/Mₙ >1, um so mehr nimmt die Zahl der katalysator-inaktiven Kettenenden (d.h. sogenannte tote Kettenenden oder abgebrochene Ketten) zu, die zu einer Ankopplung eines weiteren Bocks nicht mehr fähig sind.

Für das Verfahren zur Herstellung von Blockcopolymeren bedeutet dies, daß je mehr sich M_{w}/Mₙ des in der Polymerisationsstufe X hergestellten Polymerblocks X zu dem Zeitpunkt, in dem die Änderung der Reaktionsparameter erfolgt, in der Nähe des Wertes 1 befindet, umso größer wird der Anteil von Blockpolymerketten im fertigen Produkt, bei denen eine chemische Ankopplung zwischen Block X und Block X+1 realisiert wurde.

Bezogen auf die strukturelle Einheitlichkeit bzw. Reinheit der Cycloolefinblockcopolymere bedeutet das, daß die Zeiffenster für die einzelnen Polymerisationsstufen möglichst so gewählt werden sollten, daß sie einem M_{w}/Mₙ der entsprechenden Polymerblöcke von nahezu 1 entsprechen, um Cycloolefinblockcopolymere hoher Reinheit und hoher struktureller Einheitlichkeit zu erhalten.

Möchte man auch ein bestimmtes Molekulargewicht eines Polymerblocks ansteuern, so muß die Reaktionsdauer auch auf das gewünschte Molekulargewicht eingestellt werden.

Während einer Polymerisationsstufe, bzw. der Bildung eines Polymerblocks, werden die Monomerverhältnisse in dem Reaktionsraum in der Regel konstant gehalten, so daß chemisch einheitliche Polymerblöcke entstehen. Es ist nun aber auch möglich, während einer Polymerisationsstufe die Monomerverhältnisse kontinuierlich zu verändern, was dann zu Polymerblöcken führt, die entlang der Polymerkette einen strukturellen Gradienten aufweisen, d.h. daß sich das Einbauverhältnis (z.B. das Verhältnis zwischen der Anzahl von Norbornenbausteinen und der von Ethylenbausteinen in einem Teil des Polymerblocks) entlang des entsprechenden Polymerblocks kontinuierlich verändert. Bei Polymerblöcken, die aus mehr als zwei Monomerarten aufgebaut werden, kann dieser Gradient durch die kontinuierliche Veränderung der Konzentration einer einzigen Monomerkomponente erzielt werden.

Blöcke mit strukturellen Gradienten sind auch in solchen Polymerisationsstufen zu erzeugen, in denen die Konzentration mehrerer Monomerkomponenten gleichzeitig kontinuierlich verändert wird.

Die vorzunehmenden Veränderungen der Monomerverhältnisse können z.B. durch Veränderung des Druckes des acyclischen Olefins, durch eine Veränderung der Temperatur und damit der Löslichkeit gasförmiger Olefine, durch Verdünnung mit Lösungsmittel bei konstantem Druck des acyclischen Olefins oder auch durch das Zudosieren eines flüssigen Monomers erreicht werden. Auch können mehrere der genannten Parameter gleichzeitig geändert werden.

Solche plötzlichen wie auch kontinuierlichen Veränderungen des Monomerverhältnisses - und damit die Herstellung von Blockcopolymeren - können sowohl bei einer diskontinuierlichen Reaktionsführung wie auch bei einer kontinuierlichen Reaktionsführung realisiert werden.

Besonders vorteilhaft sind kontinuierliche sowie mehrstufige Polymerisationsverfahren, weil sie einen ökonomisch günstigen Einsatz des Cycloolefins ermöglichen. Auch läßt sich bei kontinuierlichen Verfahren das cyclische Olefin, welches als Restmonomer zusammen mit dem Polymeren anfallen kann, zurückgewinnen und wieder dem Reaktionsgemisch zuführen.

Bei einer solchen Polymerisationsführung kann die Blocklänge über Durchsatz und Reaktionsvolumen der unterschiedlichen Reaktionsgefäße gesteuert werden (d.h. diese beiden Größen bestimmen die Verweilzeit an den unterschiedlichen Reaktionsorten).
Als für die Legierungen bevorzugte Cycloolefinblockcopolymere sind Norbornen/ Ethylen-Blockcopolymere, Norbornen/Ethylen/Propylen-Blockcopolymere, Dimethanooctahydronaphthalen (Tetracyclododecen)/Ethylen-Blockcopolymere, Dimethanooctahydronaphthalen/Ethylen/Propylen-Blockcopolymere und Blockcopolymere zu nennen, bei denen jede Polymersequenz bzw. Polymerblock aus einem Copolymer, d.h. Bi-, Ter- oder Multipolymer aufgebaut ist und mindestens in einer Polymerisationsstufe auch Norbornen oder Dimethanooctahydronaphthalen eingebaut wurde. Die besonders bevorzugten Norbornen/Ethylen-Blockcopolymere, Norbornen/Ethylen/Propylen-Blockcopolymere und entsprechende Dimethanooctahydronaphthalen-Blockcopolymere sind aus Norbornen/Ethylen, Norbornen/Ethylen/Propylen-Copolymersequenzen oder entsprechende Dimethanooctahydronaphthalen-Copolymersequenzen unterschiedlicher Zusammensetzung aufgebaut, d.h. sie bestehen aus Blöcken (Polymersegmenten), die jeweils Norbornen/Ethylen-Copolymere, Norbornen/Ethylen/PropylenTerpolymere oder entsprechenden Dimethanooctahydronaphthalen-Co- oder Terpolymere darstellen.

Die nach dem beschriebenen Verfahren hergestellten Cycloolefinblockcopolymere können entsprechend der vorliegenden Erfindung als Phasenvermittler bezeichnet werden, da sie sich an der Grenzfläche der Polymerphasen anordnen können, damit die Grenzflächenspannung vermindern, die Adhäsion zwischen den Phasen erhöhen und die Größe der Teilchen (disperse Phase) in der Legierung kontrollieren. Eine Phasenvermittlung von Polymeren ist meist umso erfolgreicher, je größer die strukturellen Ähnlichkeiten der Blöcke des Phasenvermittlers mit den zu vermittelnden Polymeren sind. Vorteilhaft ist in diesem Sinne auch eine vollständige Mischbarkeit mindestens einer Blocksorte in mindestens einem Polymeren. Auf die Phasenvermittlung von Cycloolefinpolymeren und Polyolefinen angewendet, sollten bevorzugt Cycloolefinblockcopolymere eingesetzt werden, die als überwiegend eingebaute Monomerkomponente oder -komponenten in den Blöcken solche enthalten, die auch als Monomerkomponente oder -komponenten in den zu kompatibilisierenden Polymeren enthalten sind. Falls das Polyolefin (B) Polyethylen ist, so sollte vorzugsweise im Blockcopolymeren (C) mindestens ein Block überwiegend Ethyleneinheiten und mindestens ein Block überwiegend Cycloolefin-Einheiten enthalten, insbesondere solche, die im Cycloolefincopolymeren (A) vorkommen. Entsprechendes gilt für Polypropylen. Die Legierungen mit Phasenvermittler besitzen meist drastisch bessere mechanische Eigenschaften. Außerdem können sie die Phasenstrukturen durch das Verhindern der Koaleszenz stabilisieren.

Die in die Legierungen eingesetzten Polyolefine (B) leiten sich von offenkettigen nicht cyclischen Olefinen ab, beispielsweise von Ethylen, Propylen, Buten-1, Hexen-1, 4-Methyl-penten-1, Isobutylen, Isopren oder Butadien. Neben Polyisopren und Polybutadien sind auch elastomere Butadienco- und -terpolymere und/oder deren Pfropfcopolymere sowie elastomere Poly-olefinco- und -terpolymere und/oder deren Pfropfcopolymere einsetzbar. Vorzugsweise leiten sich die Polyolefine ab von 1-Olefinen, wobei auch Styrole und/oder deren Co- und Terpolymere sowie Pfropfcopolymere dieser hierunter fallen. Bevorzugte Polyolefine enthalten aliphatische 1-Olefine, insbesondere mit 2 bis 8 C-Atomen, z.B. Ethylen, Propylen, Buten-1, Hexen-1, 4-Methyl-penten-1 und Okten-1.

Einsetzbare Polyolefine sind insbesondere auch Co- und Terpolymere verschiedener 1-Olefine, die auch cyclische Olefine enthalten können, z.B. von Ethylen, Propylen, Hexadien, Dicyclopentadien und Ethylidennorbornen.

Das Gewichts verhältnis Polyolefin(e), Blockcopolymer(e) sollte mindestens 1:1 sein. Polyolefin kann feinteilig sein; als feinteiliges Polyolefin wird feinteiliges Polypropylen, vorzugsweise feinteiliges, isotaktisches Polypropylen eingesetzt.

Die in die Legierungen bevorzugt eingesetzten Polyethylene (B) sind Polyethylen mit hoher (HDPE) und mittlerer Dichte (MDPE). Sie werden nach dem Niederdruckverfahren mit entsprechenden Katalysatoren hergestellt. Kennzeichnende Eigenschaften sind: niedrige Dichte im Vergleich mit anderen Kunststoffen (< 0,96 g/cm³), hohe Zähigkeit und Reißdehnung, sehr gute elektrische und dielektrische Eigenschaften, sehr gute Chemikalienbeständigkeit, je nach Typ hohe Beständigkeit gegen Spannungsrißbildung und gute Ver- und Bearbeitbarkeit.

Feinteiliges Polyethylen oder mehrere feinteilige Polyethylene sollten in Mengen von 0-50 Gew.-Teilen eingesetzt werden Polyethylen-Moleküle enthalten Verzweigungen. Der Grad der Verzweigung der Molekülketten und die Länge der Seitenketten beeinflussen die Eigenschaften des Polyethylens wesentlich. Die HDPE- und MDPE-Typen sind wenig und nur mit kurzen Seitenketten verzweigt.

Polyethylen kristallisiert beim Abkühlen aus der Schmelze: Die langen Molekülketten ordnen sich in Teilbereichen gefaltet und bilden sehr kleine Kristallite, die zusammen mit amorphen Zonen zu Überstrukturen, den sog. Sphärolithen verbunden sind. Die Kristallisation ist um so besser möglich, je kürzer die Ketten sind und je geringer der Verzweigungsgrad ist. Der kristalline Anteil weist eine höhere Dichte auf als der amorphe. Man erhält daher unterschiedliche Dichten, abhängig vom kristallinen Anteil. Dieser Kristallisationsgrad beträgt je nach Polyethylen-Typ zwischen 35 % und 80 %.

Polyethylen hoher Dichte (HDPE) erreicht 60 % bis 80 % Kristallisationsgrad bei Dichten zwischen 0,940 g/cm³ und 0,965 g/cm³; Polyethylen mittlerer Dichte, MDPE, erreicht 50 % bis 60 % Kristallisationsgrad bei 0,930 g/cm³ bis 0,940 g/cm³ Dichte.

Die Eigenschaften von Polyethylen werden vorwiegend durch Dichte, Molmasse und Molmassenverteilung bestimmt. So nimmt z. B. die Schlag- und Kerbschlagzähigkeit, Reißfestigkeit, die Reißdehnung und der Widerstand gegen Spannungsrißbildung zu mit der Molmasse. Engverteiltes HDPE mit geringem niedermolekularem Anteil ist schlagzäher, auch bei tiefer Temperatur, als breitverteiltes innerhalb gleicher Bereiche für Schmelzindex und Viskositätszahl. Breitverteilte Typen wiederum sind leichter verarbeitbar.

Je höher das Molekulargewicht von Polyethylen, umso schwieriger wird das Herstellen von Legierungen mittels Extruder. Während ein Polyethylen mit einer mittleren Masse von etwa 4,9 x 10⁺⁵ g/mol eben noch als einzige Polyethylen-Komponente verwendet werden kann, sind z. B. Polyethylentypen zwischen 0,5 bis 8 x 10⁶ g/mol nur in legierter Form, d.h. als erfindungsgemäße Legierung mit entsprechend zunehmendem Gehalt an Komponente A und C mittels Extrusion oder Spritzguß zu verarbeiten. Um die Verarbeitbarkeit solcher Legierungen bei weitgehendem Erhalt der mechanischen Eigenschaften zu optimieren, kann zusätzlich zu dem hochmolekularen Polyethylen auch HDPE (0,1 - 0,5 x 10⁶ g/mol) als Teil der Komponente B in die erfindungsgemäßen Legierungen eingemischt werden. Diese ultrahochmolekularen Niederdruckpolyethylene (UHMWPE) können ausdrücklich auch Bestandteile der Polymerlegierungen sein.

Polypropylen ist ein mit Hilfe stereospezifisch wirkender Katalysatoren hergestelltes isotaktisches, syndiotaktisches oder ataktisches Polypropylen. Nur das isotaktische Polypropylen, bei dem alle Methylgruppen auf einer Seite der zickzackförmig gedachten Molekülkette angeordnet sind, hat die Eigenschaften eines technisch brauchbaren Werkstoffs.

Bei Abkühlen aus der Schmelze begünstigt dieser regelmäßige Aufbau das Entstehen kristalliner Bereiche. Die Kettenmoleküle werden jedoch selten in ganzer Länge in einen Kristallit eingebaut, da sie auch nicht-isotaktische und damit nicht krstallisationsfähige Anteile enthalten. Außerdem entstehen amorphe Bereiche durch die Verschlaufungen der Ketten in der Schmelze, besonders bei hohem Polymerisationsgrad. Der kristalline Anteil ist von den Herstellbedingungen der Formteile abhängig und beträgt 50 % bis 70 %. Der teilkristalline Aufbau bewirkt wegen der hohen Sekundärkräfte im Kristallit etwas Festigkeit und Steifheit, während die ungeordneten Bereiche mit der höheren Beweglichkeit ihrer Kettensegmente oberhalb der Einfriertemperatur Flexibilität und Zähigkeit ergeben.

Der Anteil an Cycloolefinpolymeren (A) in den erfindungsgemäßen Legierungen beträgt bevorzugt 0 bis 90 Gew.-% und besonders bevorzugt 0 bis 85 Gew.-%, der Anteil an Polyolefinen (B), in den erfindungsgemäß hergestellten Legierungen beträgt bevorzugt maximal 90 Gew.-% und besonders bevorzugt maximal 85 Gew.-%. Der Anteil der Cycloolefinblockcopolymere beträgt bevorzugt 1 bis 60 und besonders bevorzugt 1 bis 55 Gew.-%, wobei sich die Anteile der Komponenten A, B und C, auf 100 Gew.-% ergänzen. Die erfindungsgemäß hergestellten Legierungen können ein oder mehrere Cycloolefinpolymere, ein oder mehrere Polyolefine, insbesondere Polyethylene oder Polypropylene, und ein oder mehrere Cycloolefinblockcopolymere enthalten.

Die genannten Polymer-Legierungen werden durch für Thermoplasten bekannte Standardmethoden hergestellt und verarbeitet, wie z. B. durch Kneten, Pressen, Extrusion oder Spritzguß.

Die erfindungsgemäß hergestellten Legierungen können Additive enthalten, beispielsweise thermische Stabilisatoren, UV-Stabilisatoren, Antistatika, Flammschutzmittel, Plastifizierer, Gleit- und Schmiermittel, Pigmente, Farbstoffe, optische Aufheller, Verarbeitungshilfsmittel, anorganische und organische Füllstoffe, d. h. insbesondere auch verstärkende Materialien wie Glas-, Kohle- oder Hochmodulfasern. Die Legierungen können als Matrix für Verbundwerkstoffe und insbesondere vorteilhaft zur Herstellung von Formkörpern nach dem Preß-, Spritzguß- oder Extrusionsverfahren verarbeitet werden. Beispiele für Formkörper sind Platten, Fasern, Folien und Schläuche.

Es wurden folgende Polymere nach Standardmethoden hergestellt:
Cycloolefincopolymer A1 [COC A1], A2 [COC A2], A3 [COC A3] und A4 [COC A4]

### Herstellung von COC A1

Ein sauberer und trockener 75-dm³-Polymerisationsreaktor mit Rührer wurde mit Stickstoff und dann mit Ethylen gespült. Anschließend wurden 20550 g Norbornenschmelze (Nb) im Polymerisationsreaktor vorgelegt. Unter Rühren wurde der Reaktor auf eine Temperatur von 70 °C gebracht und 6 bar Ethylen aufgedrückt.

Danach wurden 250 cm³ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 6 bar gehalten wurde. Parallel dazu wurden 500 mg Diphenylmethylen(9-fluorenyl)-cyclopentadienyl-zirkondichlorid in 250 cm³ toluolischer Methylaluminoxanlösung (Konzentration und Qualität siehe oben) gelöst und durch 15 minütiges Stehenlassen voraktiviert. Dann wurde die Lösung des Komplexes (Katalysatorlösung) in den Reaktor dosiert. Um den Anstieg des Molekulargewichts zu bremsen, kann unmittelbar nach der Dosierung des Katalysators Wasserstoff über eine Schleuse diskontinuierlich oder kontinuierlich dem Reaktionsgefäß zugeführt werden (siehe COC A2 bzw. COC A3). Unter Rühren wurde dann 305 Minuten bei 70°C polymerisiert, wobei der Ethylendruck durch Nachdosieren bei 6 bar gehalten wurde. Dann wurde der Reaktorinhalt schnell in ein Rührgefäß abgelassen, in dem 40 l flüssige gesättigte aliphatische Kohlenwasserstoffe (®Exxsol 100/110), 1000 g ®Celite J 100 sowie 200 cm³ E-Wasser bei 70 °C vorgelegt waren. Die Mischung wurde filtriert, so daß das Filterhilfsmittel (Celite J 100) zurückgehalten wurde und eine klare Polymerlösung als Filtrat resultierte. Die klare Lösung wurde in Aceton ausgefällt, 10 Minuten gerührt und dann der suspendierte polymere Feststoff abfiltriert.

Um restliches Lösemittel aus dem Polymer zu entfernen wurde das Polymer noch 2 Mal mit Aceton ausgerührt und abfiltriert. Die Trocknung erfolgte bei 80 °C unter Vakuum innerhalb 15 Stunden.
Ausbeute: 4400 g

### Herstellung von COC A2

Die Herstellung von COC A2 erfolgte analog zu COC A1, wobei unmittelbar nach Katalysatorzudosierung 1350 ml Wasserstoff zugeführt wurden. Die anderen geänderten Reaktionsbedingungen sind in Tabelle 1 zusammengefaßt.

### Herstellung von COC A3

Die Herstellung von COC A3 erfolgte analog zu COC A1, wobei nach Katalysatorzudosierung kontinuierlich 1875 ml Wasserstoff zugeführt wurden. Die anderen geänderten Reaktionsbedingungen sind in Tabelle 1 zusammengefaßt.

### Herstellung von COC A4

Die Herstellung von COC A4 erfolgte analog zu COC A1. Die geänderten Reaktionsbedingungen sind in Tabelle 1 zusammengefaßt.

**Tabelle 1:**

| Cycloolefincopolymer | Norbornenmenge [g] | T [°C] | Druck [bar] | Metallocen | | Kat.-Lösung [cm³] | Zeit [Min.] | Menge Produkt [g] |
|---|---|---|---|---|---|---|---|---|
| | | | | Art | Menge [mg] | | | |
| A2 | 20550 | 70 | 3,5 | A | 250 | 750 | 135 | 5716 |
| A3 | 10700^{*} | 70 | 3 | A | 350 | 850 | 72 | 6000 |
| A4 | 10700^{*} | 70 | 2,9 | A | 350 | 1500 | 55 | 4523 |

| | | | | | | | | |
|---|---|---|---|---|---|---|---|---|
| * in 27 l Exxsol | | | | | | | | |

Metallocen A: Diphenylmethylen(9-fluorenyl)-cyclopentadienylzirkondichlorid

### Cycloolefincopolymer A5 [COC A5]

Ein sauberer und trockener 75-dm³-Polymerisationsreaktor mit Rührer, wurde mit Stickstoff und dann mit Ethylen gespült. Anschließend wurde 27 l Exxsol und 10700 g Norbonenschmelze im Polymerisationsreaktor vorgelegt. Unter Rühren wurde der Reaktor auf eine Temperatur von 70°C gebracht und 2,5 bar Ethylen aufgedrückt.

Danach wurden 500 cm³ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70°C gerührt, wobei durch Nachdosieren der Ethylendruck bei 2,5 bar gehalten wurde. Parallel dazu wurden 37 mg i-Propylen(9-fluorenyl)-cyclopentadienyl-zirkondichlorid in 300 cm³ toluolischer Methylaluminoxanlösung (Konzentration und Qualität siehe oben) gelöst und durch 15 minütiges Stehenlassen voraktiviert. Dann wurde die Lösung des Metallocens (Katalysatorlösung) in den Reaktor dosiert. Unter Rühren wurde 90 Minuten bei 70°C polymerisiert, wobei der Ethylendruck durch Nachdosieren bei 2,5 bar gehalten wurde. Dann wurde der Reaktorinhalt schnell in ein Rührgefäß abgelassen, in dem 40 l Exxsol 100/110, 1000 g Celite J 100 sowie 200 cm³ E-Wasser bei 70°C vorgelegt waren. Die Mischung wurde filtriert, so daß das Filterhilfsmittel (Celite J 100) zurückgehalten wurde und eine klare Polymerlösung als Filtrat resultierte. Die klare Lösung wurde in Aceton ausgefällt, 10 Minuten gerührt und der suspendierte polymere Feststoff abfiltriert.

Um restliches Lösungsmittel aus dem Polymer zu entfernen wurde das Polymer noch 2 mal mit Aceton ausgerührt und abfiltriert. Die Trocknung erfolgte bei 80°C unter Vakuum innerhalb 15 Stunden.
Ausbeute: 5100 g

Die physikalischen Kenndaten der fünf Cycloolefincopolymere COC A1, COC A2, COC A3, COC A4 und COC A5 sind Tabelle 2 zu entnehmen.

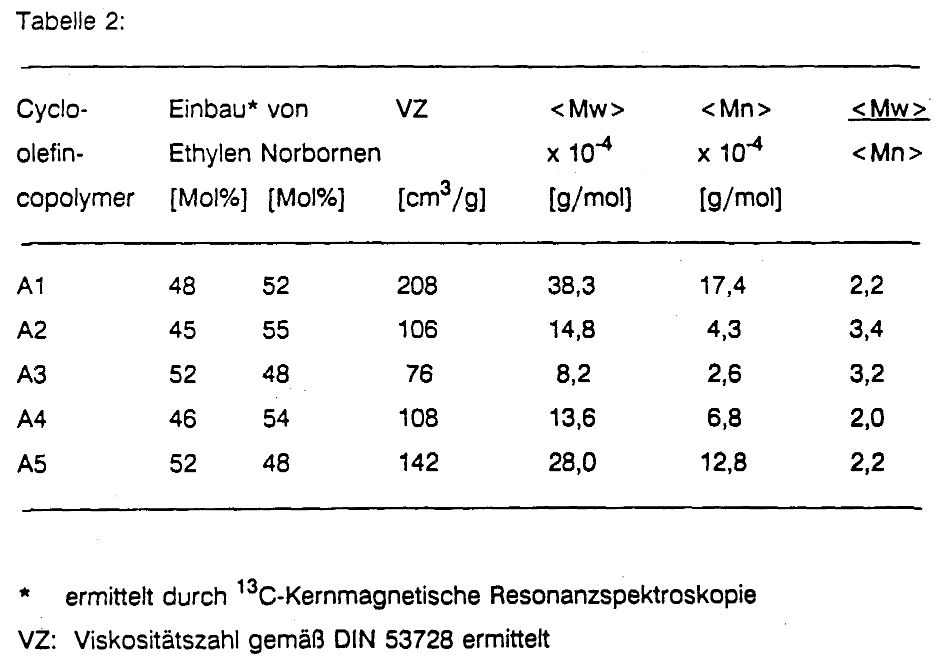

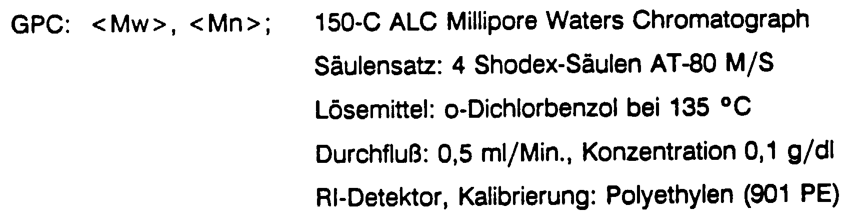

Weitere Charakteristika der Cycloolefincopolymere A1, A2, A3, A4 und A5 sind den Beispielen zu entnehmen.

### Herstellung von Cycloolefinblockcopolymer COC C1, COC C2, COC C3 und COC C4

### Herstellung von COC C1

Ein sauberer und trockener 1,5 1 Autoklav mit Rührer, wurde mit Stickstoff und dann mit Ethylen gespült.

Anschließend wurden 375 ml Toluol und 107 g (1,14 mol) Norbornen sowie 20 ml einer 10 %-igen toluolischen Methylaluminoxanlösung im Autoklaven vorgelegt. Unter Rühren wurde der Autoklav auf eine Temperatur von 20 °C gebracht und 1,0 bar Ethylen aufgedrückt.

Parallel hierzu wurden 90,7 mg (0,2 mmol) rac-Dimethylsilyl-bis-(1-indenyl)-zirkondichlorid in 20 ml Methylaluminoxanlösung (siehe oben) gelöst und durch 15-minütiges Stehenlassen voraktiviert. Dann wurde die Metallocen-Methylaluminoxan-Lösung in den Autoklaven dosiert. Unter Rühren wurde dann 45 Minuten bei 20 °C polymerisiert, wobei der Ethylendruck durch Nachdosieren bei 1,0 bar gehalten wurde.

Nach 45 Minuten wurde dann eine Lösung aus 520 ml Toluol und 20 ml einer 20 %-igen Lösung von Trimethylaluminium in ^{®}Exxsol mit einem Ethylendruck von 15,0 bar in den Autoklaven dosiert und 2 Minuten bei diesem Druck polymerisiert. Anschließend wurde die Stopperlösung aus 30 ml Isopropanol und 20 ml Exxsol in den Autoklaven mit Überdruck zudosiert. Die Polymerlösung wurde unter stetem Rühren entspannt und dann abgelassen.

Die Lösung wurde in Aceton ausgefällt und 2 Mal damit gewaschen. Anschließend wurde das erhaltene Polymer in eine konzentrierte Salzsäure-Wasser-Lösung eingerührt, worin es etwa 2 Stunden stand. Danach wurde das Polymer neutral gewaschen und noch zwei Mal mit Aceton ausgerührt. Die Trocknung erfolgte bei 50 °C unter Vakuum innerhalb 15 Stunden.
Ausbeute: 36,6 g

### Herstellung von COC C2

Die Herstellung von COC C2 erfolgte analog zu COC C1, wobei 85 mg (0,19 mmol) rac-Dimethylsilyl-bis-(1-indenyl)-zirkondichlorid verwendet wurden und die Eindosierung der Lösung aus 520 ml Toluol und 20 ml einer 20 %-igen Lösung von Trimethylaluminium in ®Exxsol mit dem Ethylendruck von 15,0 bar nach 30 Minuten erfolgte.
Ausbeute: 96,4 g

### Herstellung von COC C3

Ein sauberer und trockener 75-dm³-Polymerisationsreaktor mit Rührer wurde mit Stickstoff und dann mit Ethylen gespült. Anschließend wurden 50 l Exxsol und 2,4 kg Norbornenschmelze im Polymerisationsreaktor vorgelegt. Unter Rühren wurde der Reaktor auf eine Temperatur von 40 °C gebracht und 1 bar Ethylen aufgedrückt.

Danach wurden 500 cm³ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 40 °C gerührt, wobei durch Nachdosieren der Ethylendruck bei 1 bar gehalten wurde. Parallel dazu wurden 2000 mg rac-Dimethylsilyl-bis-(1-indenyl)-zirkondichlorid in 500 cm³ toluolischer Methylaluminoxanlösung (Konzentration und Qualität siehe oben) gelöst und durch 15-minütiges Stehenlassen voraktiviert. Dann wurde die fertige Katalysatorlösung in den Reaktor dosiert. Unter Rühren wurde dann 45 Minuten bei 40 °C polymerisiert, wobei der Ethylendruck durch Nachdosieren bei 1 bar gehalten wurde.

Anschließend wurde 1 l Propylen (flüssig) in den Polymerisationsreaktor dosiert, der Reaktionsdruck wurde mit Ethylen auf 3,3 bar gesteigert und durch Nachdosieren von Ethylen bei 3,3 bar gehalten. Dann wurde der Reaktorinhalt schnell in ein Rührgefäß abgelassen, in dem 40 l Exxsol 100/110, 1000 g ®Celite J 100 sowie 200 cm³ E-Wasser bei 70 °C vorgelegt waren. Die Mischung wurde filtriert, so daß das Filterhilfsmittel (Celite J 100) zurückgehalten wurde und eine klare Polymerlösung als Filtrat resultierte. Die klare Lösung wurde in Aceton ausgefällt, 10 Minuten gerührt und dann der suspendierte polymere Feststoff abfiltriert.

Um restliches Lösemittel aus dem Polymer zu entfernen wurde das Polymer noch 2 Mal mit Aceton ausgerührt und abfiltriert. Die Trocknung erfolgte bei 80 °C unter Vakuum innerhalb 15 Stunden.
Ausbeute: 3200 g

### Herstellung von COC C4

Ein sauberer und trockener 75-dm³-Polymerisationsreaktor mit Rührer wurde mit Stickstoff und dann mit Ethylen gespült. Anschließend wurden 16,5 l Toluol und 3,5 l Norbornenschmelze im Polymerisationsreaktor vorgelegt. Unter Rühren wurde der Reaktor auf eine Temperatur von 40°C gebracht und 1 bar Ethylen aufgedrückt.

Danach wurden 500 cm³ mit toluolische Methylaluminoxanlösung (10,1 Gew.-% Methylaluminoxan mit Molmasse 1300 g/mol nach kryskopischer Bestimmung) in den Reaktor dosiert und die Mischung 15 Minuten bei 40°C gerührt, wobei durch Nachdosieren der Ethylendruck bei 1 bar gehalten wurde. Parallel dazu wurden 800 mg rac-Dimethylsilyl-bis-(1-indenyl)-zirkondichlorid in 500 cm³ toluolischer Methylaluminoxanlösung (Konzentration und Qualität siehe oben) gelöst und durch 15 minütiges Stehenlassen voraktiviert. In einer Druckschleuse wurden 40 l Toluol mit 2000 cm³ toluolischer Methylaluminoxanlösung (Konzentration und Qualität siehe oben) vorgelegt und mit Propylen bei 5 bar gesättigt. Anschließend wurde der Druck mit Ethylen auf 15 bar gesteigert und bis zur Sättigung Ethylen nachdosiert. Dann wurde die Lösung des Metallocens (Katalysatorlösung) in den Reaktor dosiert. Unter Rühren wurde dann 30 Minuten bei 40°C polymerisiert, wobei der Ethylendruck durch Nachdosieren bei 1 bar gehalten wurde. Anschließend wurde der Schleuseninhalt schlagartig in den Polymerisationsreaktor dosiert, der Reaktionsdruck wurde mit Ethylen auf 13,5 bar gehalten. Nach 5 Minuten wurde der Reaktorinhalt schnell in ein Rührgefäß abgelassen, in dem 40 l Exxsol 100/110, 1000 g ®Celite J 100 sowie 200 cm³ E-Wasser bei 70°C vorgelegt waren. Die Mischung wurde filtriert, so daß das Filterhilfsmittel (Celite J 100) zurückgehalten wurde und eine klare Polymerlösung als Filtrat resultierte. Die klare Lösung wurde in Aceton ausgefällt, 10 Minuten gerührt und dann der suspendierte polymere Feststoff abfiltriert.

Um restliches Lösungsmittel aus dem Polymer zu entfernen wurde das Polymer noch 2 mal mit Aceton ausgerührt und abfiltriert. Die Trocknung erfolgte bei 50°C unter Vakuum innerhalb 15 Stunden.
Ausbeute: 5727 g

Die physikalischen Kenndaten der Cycloolefinblockcopolymere sind der Tabelle 3 und den Beispielen zu entnehmen:

**Tabelle 3:**

| Cycloolefinblockcopolymer | VZ [cm³/g] | <Mw> x 10⁻⁴ [g/mol] | <Mn> x 10⁻⁴ [g/mol] | <Mw> <Mn> | Tg 1 [°C] | Tg 2 [°C] |
|---|---|---|---|---|---|---|
| C 1 | 148,8 | 11,5 | 5,8 | 2,0 | 27,8 | 120,0 |
| C 2 | 110,9 | 8,4 | 4,5 | 1,9 | 25,1 | 152,8 |
| C 3 | 122,6 | 11,2 | 5,9 | 1,9 | 29,5 | 107,8 |
| C 4 | 129,0 | 8,9 | 1,9 | 4,7 | -11,5 | 150,8 |
| VZ: Viskositätszahl gemäß DIN 53728 ermittelt | | | | | | |
| GPC: <Mw>, <Mn>; 150-C ALC Millipore Waters Chromatograph Säulensatz: 4 Shodex-Säulen AT-80 M/S Lösemittel: o-Dichlorbenzol bei 135 °C Durchfluß: 0,5 ml/Min., Konzentration 0,1 g/dl, RI-Detektor, Kalibrierung: Polyethylen (809 PE) | | | | | | |
| Tg: Glasstufen gemessen mit Differential-Scanning-Calorimeter (DSC-7) der Firma Perkin-Elmer (Überlingen)-Aufheiz- und Abkühlgeschwindigkeit 20 K/Minute - bzw. mit Torsionspendelautomat der Firma Brabender (Duisburg) | | | | | | |

### Polyethylen (B1/B2/B3/B4)

Die eingesetzten Polyethylene B1, B2, B3 und B4 mit hoher Dichte können kommerziell erworben werden. B1 wird beispielsweise als ^{®}Hostalen GF 4760 von der Fa. Hoechst AG, Frankfurt am Main vertrieben. B2 ist ^{®}Hostalen GD 4760, B3 ist ^{®}Hostalen GM9240 HT und B4 ist ^{®}Hostalen GURX106 (UHMWPE).

### Polypropylen (B5)

Das eingesetzte isotaktische Polypropylen B5 kann kommerziell erworben werden. Es wird als ®Hostalen PPH 1050 von der Fa. Hoechst AG, Frankfurt am Main vertrieben.

### Herstellung der Legierungen

Die oben beschriebenen Polymere wurden zunächst getrocknet (115 °C, 24 h, Vakuum) und anschließend in verschiedenen Gewichtsverhältnissen in einem Meßkneter (Fa. HAAKE (Karlsruhe), ®Rheocord System 40/Rheomix 600)) bzw. Meßextruder (Fa. HAAKE (Karlsruhe), Rheocord System 90/Rheomex TW 100)) unter Schutzgas (Ar) geknetet bzw. extrudiert. Die erhaltenen gemahlenen bzw. granulierten Legierungen wurden getrocknet (115 °C, 24 h, Vakuum) und anschließend entweder zu Platten (120 X 1 mm) verpreßt (Vakuumpresse: ®Polystat 200 S, Fa. Schwabenthan (Berlin)) oder zu Formkörper (große Schulterstäbe nach ISO/DIS 3167, Norm-Kleinstab nach DIN 53451) verspritzt (Spritzgußmaschine: KM 90-210 B mit ®Microcontrole MG 3, Fa. Krauss Maffei (München)). Die erhaltenen Schmelzpreßplatten, Schulterstäbe und Norm-Kleinstäbe wurden auf ihre physikalischen Eigenschaften hin untersucht.

Dazu wurden folgende Geräte verwendet:

Ein Differential-Scanning-Calorimeter (DSC-7) der Firma Perkin-Elmer (Überlingen) zur Messung beispielsweise von Glasstufen, Schmelzpunkten und Schmelzwärmen.

Ein Torsionspendelautomat der Firma Brabender (Duisburg) zur Messung von Schubmodul, Dämpfung und Längenausdehnung.

Eine Zug-Dehnungs-Prüfmaschine (Typ: ®Instron 4302) der Firma Instron (Offenbach).

Ein Schmelzindex-Prüfgerät MPS-D der Firma Goettfert (Buchen) zur Messung von Fließfähigkeiten. Schmelzindex nach DIN 53735-MVI-B (Stempellast/Temperatur variabel; Zylinder: Innenmaß 9,55 (+ /- 0,01) mm, Länge mindestens 115 mm, Austrittsdüse 2,095 (+ /- 0,005) mm, wobei als Aufschmelzzeit 5 Minuten gewählt wurden.

Ein Härteprüfgerät (Typ: Zwick 3106) der Firma Zwick (Ulm) zur Messung der Kugeldruckhärten nach DIN ISO 2039.

Ein Pendelschlagwerk (Typ: Zwick 5102) der Firma Zwick (Ulm) zur Messung der Schlagzähigkeiten nach DIN 53453.

Die Bestimmung der Formbeständigkeitstemperatur (HDT) wurde nach DIN 53461 durchgeführt.
Die Izod-Kerbschlagzähigkeit wurde nach ISO 180/1A bestimmt.

### Beispiel 1:

Mittels des Meßkneters wurden das Cycloolefincopolymere A1, das Polyethylen B1 und z. T. das Cycloolefinblockcopolymere C1 (Phasenvermittler) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

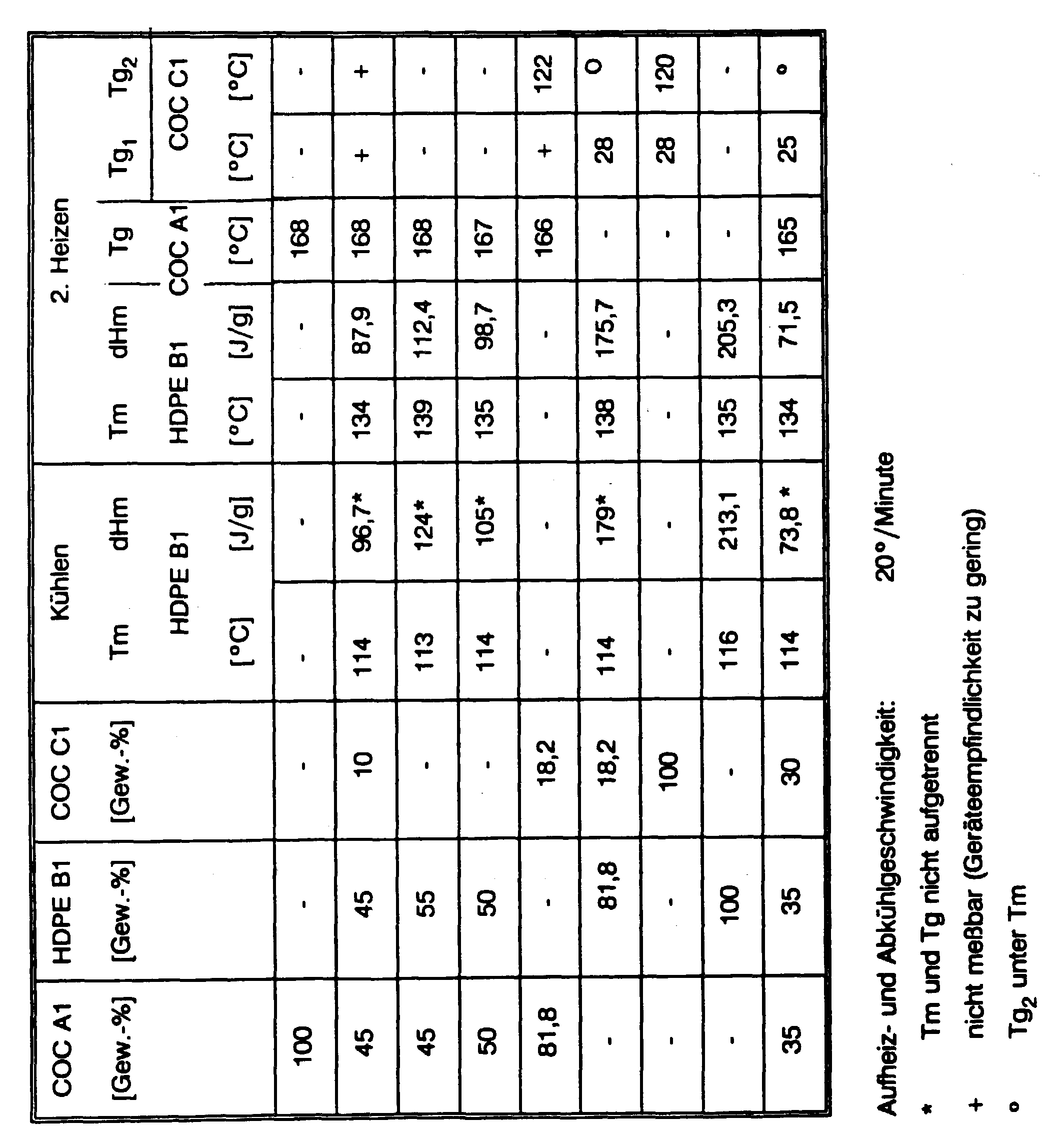

### Beispiel 2:

Mittels des Meßkneters wurden das Cycloolefincopolymere Al, das Polyethylen B1 und z. T. das Cycloolefinblockcopolymere C1 (Phasenvermittler) in verschiedenen Gewichtsverhältnissen nach intensiver Trocknung gemeinsam unter Argonatmosphäre geknetet und anschließend gemahlen. Die Mahlprodukte wurden nach intensiver Trocknung zur Messung der Fließfähigkeiten verwendet. Diese sind in der nachstehenden Tabelle aufgeführt.

| COC A1 [Gew.-%] | HDPE B1 [Gew.-%] | COC C1 [Gew.-%] | MVI 21,6 kg/250°C [cm³/10 Minuten] |
|---|---|---|---|
| 100 | - | - | 1,5 |
| 45 | 45 | 10/e | 30,0 |
| 45 | 55 | - | 34,8 |
| 50 | 50 | - | 38,4 |
| 81,8 | - | 18,2/e | 23,2 |
| - | 81,8 | 18,2/e | 48,2 |
| - | 100 | - | 81,5 |
| 35 | 35 | 30/e | 31,6 |

Die mit "e" bezeichneten Versuche sind erfindungsgemäß, die restlichen Vergleichsversuche.

### Beispiel 3:

Mittels des Meßkneters wurden das Cycloolefincopolymere A1, das Polyethylen B1 und z. T. das Cycloolefinblockcopolymere C1 (Phasenvermittler) in verschiedenen Gewichtsverhältnissen nach intensiver Trocknung gemeinsam unter Argonatmosphäre geknetet und anschließend gemahlen. Die Mahlprodukte wurden nach intensiver Trocknung zu Preßplatten verpreßt. Nachstehende Tabelle zeigt die ermittelten mechanischen Daten der Legierungen beim Zug-Dehnungsexperiment.

| COC A1 [Gew.-%] | HDPE B1 [Gew.-%] | COC C1 [Gew.-%] | E-Modul [GPa] | Reißspannung [MPa] | Reißdehnung [%] |
|---|---|---|---|---|---|
| 100 | - | - | 3,5 | 62 | 6 |
| 45 | 45 | 10/e | 2,6 | 52 | 88 |
| 45 | 55 | - | 2,5 | 52 | 21 |
| 50 | 50 | - | 2,6 | 55 | 11 |
| 81,8 | - | 18,2/e | 3,4 | 60 | 10 |
| - | 81,8 | 18,2/e | 1,4 | 33 | 550 |
| - | 100 | - | 1,2 | 27 | 660 |
| 35 | 35 | 30/e | 2,4 | 46 | 138 |

Die mit "e" bezeichneten Versuche sind erfindungsgemäß, die restlichen Vergleichsversuche.

### Beispiel 4:

Mittels des Meßkneters wurden das Cycloolefincopolymere A2, das Polyethylen B1 und z. T. das Cycloolefinblockcopolymere C2 (Phasenvermittler) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

| COC A2 [Gew.-%] | HDPE B1 [Gew.-%] | COC A2 [Gew.-%] | Kühlen | | 2. Heizen | | | | |
|---|---|---|---|---|---|---|---|---|---|
| | | | Tm | dHm | Tm | dHm | Tg | Tg₁ | Tg₂ |
| | | | HDPE B1 | | HDPE | B1 | COCA2 | COC | A2 |
| | | | [°C] | [J/g] | [°C] | [J/g] | [°C] | [°C] | [°C] |
| 100 | - | - | - | - | - | - | 183 | - | - |
| 42,9 | 47,1 | 10 | 115 | 99,1* | 134 | 91,5 | 181 | + | + |
| 42,9 | 57,1 | - | 113 | 120,3* | 136 | 117,4 | 183 | - | - |
| 81,1 | - | 18,9 | - | - | - | - | 182 | 13 | 154 |
| - | 82,5 | 17,5 | 116 | 179,4* | 136 | 175,1 | - | + | + |
| 35,8 | 44,2 | 20 | 115 | 93,5* | 135 | 83,4 | 181 | 23 | + |
| 35,8 | 64,2 | - | 112 | 138,8* | 140 | 131,3 | 185 | - | - |
| 64,2 | - | 35,8 | - | - | - | - | 180 | 20 | 153 |
| 28,7 | 41,3 | 30 | 116 | 87,8* | 134 | 77,0 | 182 | 23 | + |
| 28,7 | 71,3 | - | 114 | 157,5* | 136 | 150,3 | 182 | - | - |
| - | 100 | - | 116 | 213,1 | 135 | 205,3 | - | - | - |
| - | - | 100 | - | - | - | - | - | 25 | 153 |
| Aufheiz- und Abkühlgeschwindigkeit: 20 K/Minute | | | | | | | | | |

| | | | | | | | | | |
|---|---|---|---|---|---|---|---|---|---|
| * Tm und Tg nicht aufgetrennt | | | | | | | | | |
| + nicht meßbar (Geräteempfindlichkeit zu gering) | | | | | | | | | |

### Beispiel 5:

Mittels des Meßkneters wurden das Cycloolefincopolymere A2, das Polyethylen B1 und z. T. das Cycloolefinblockcopolymere C2 (Phasenvermittler) in verschiedenen Gewichtsverhältnissen nach intensiver Trocknung gemeinsam unter Argonatmosphäre geknetet und anschließend gemahlen. Die Mahlprodukte wurden nach intensiver Trocknung zur Messung der Fließfähigkeiten verwendet. Diese sind in der nachfolgenden Tabelle aufgeführt.

| COC A2 [Gew.-%] | HDPE B1 [Gew.-%] | COC C2 [Gew.-%] | MVI 21,6 kg/250°C [cm³/10 Minuten] |
|---|---|---|---|
| 100 | - | - | 11,5 |
| 42,9 | 47,1 | 10/e | 43,5 |
| 42,9 | 57,1 | - | 45,5 |
| 81,1 | - | 18,9/e | 23,5 |
| - | 82,5 | 17,5/e | 57,3 |
| 35,8 | 44,2 | 20/e | 42,3 |
| 35,8 | 64,2 | - | 44,6 |
| 64,2 | - | 35,8/e | 38,3 |
| 28,7 | 41,3 | 30/e | 41,4 |
| 28,7 | 71,3 | - | 55,0 |
| - | 100 | - | 81,5 |
| - | - | 100 | 98,1 |

Die mit "e" bezeichneten Versuche sind erfindungsgemäß, die restlichen Vergleichsversuche.

### Beispiel 6:

Mittels des Meßkneters wurden das Cycloolefincopolymere A2, das Polyethylen B1 und z. T. das Cycloolefinblockcopolymere C2 (Phasenvermittler) in verschiedenen Gewichtsverhältnissen nach intensiver Trocknung gemeinsam unter Argonatmosphäre geknetet und anschließend gemahlen. Die Mahlprodukte wurden nach intensiver Trocknung zu Preßplatten verpreßt. Nachstehende Tabelle zeigt die ermittelten mechanischen Daten der Legierungen beim Zug-Dehnungsexperiment.

| COC A2 [Gew.-%] | HDPE B1 [Gew.-%] | COC C2 [Gew.-%] | E-Modul [GPa] | Reißspannung [MPa] | Reißdehnung [%] |
|---|---|---|---|---|---|
| 100 | - | - | 3,3 | 58 | 5 |
| 42,9 | 47,1 | 10/e | 2,6 | 52 | 40 |
| 42,9 | 57,1 | - | 2,6 | 51 | 9 |
| 81,1 | - | 18,9/e | 3,1 | 56 | 7 |
| - | 82,5 | 17,5/e | 0,9 | 28 | 448 |
| 35,8 | 44,2 | 20/e | 2,5 | 47 | 101 |
| 35,8 | 64,2 | - | 2,6 | 48 | 13 |
| 64,2 | - | 35,8/e | 2,8 | 53 | 27 |
| 28,7 | 41,3 | 30/e | 1,1 | 31 | 146 |
| 28,7 | 71,3 | - | 1,5 | 40 | 24 |
| - | 100 | - | 1,2 | 27 | 658 |
| - | - | 100 | 0,4 | 31 | 401 |

Die mit "e" bezeichneten Versuche sind erfindungsgemäß, die restlichen Vergleichsversuche.

### Beispiel 7:

Mittels des Meßkneters wurden das Cycloolefincopolymere A2, das Polyethylen B1 und z. T. das Cycloolefinblockcopolymere C2 (Phasenvermittler) in verschiedenen Gewichtsverhältnissen nach intensiver Trocknung gemeinsam unter Argonatmosphäre geknetet und anschließend gemahlen. Die Mahlprodukte wurden nach intensiver Trocknung zu Preßplatten verpreßt. Nachstehende Tabelle zeigt die ermittelten mechanischen Daten der Legierungen beim Torsionspendelversuch.

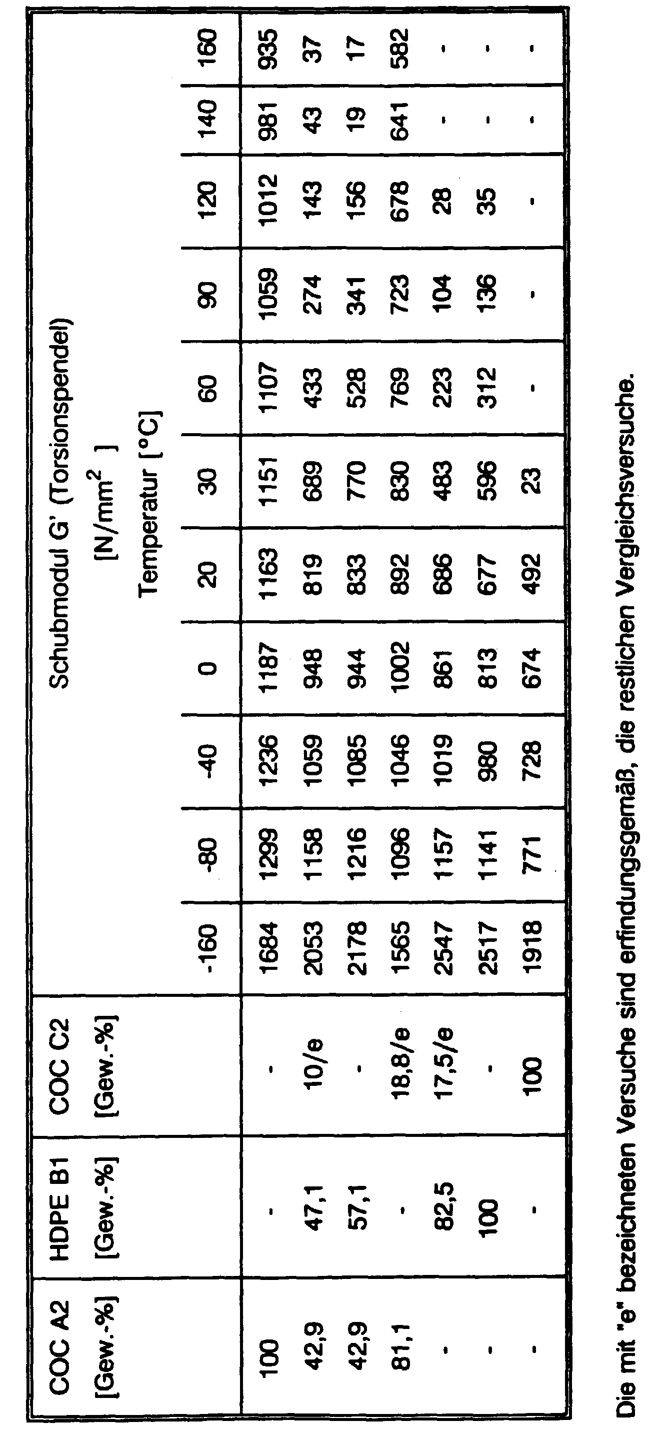

### Beispiel 8:

Mittels des Zweischneckenextruders wurden das Cycloolefincopolymere A3, das Polyethylen B2 und z. T. das Cycloolefinblockcopolymere C3 (Phasenvermittler) in verschiedenen Gewichtsverhältnissen nach intensiver Trocknung gemeinsam unter Argonatmosphäre extrudiert und granuliert. Nachstehende Tabelle zeigt die ermittelten thermischen Eigenschaften der Legierungen.

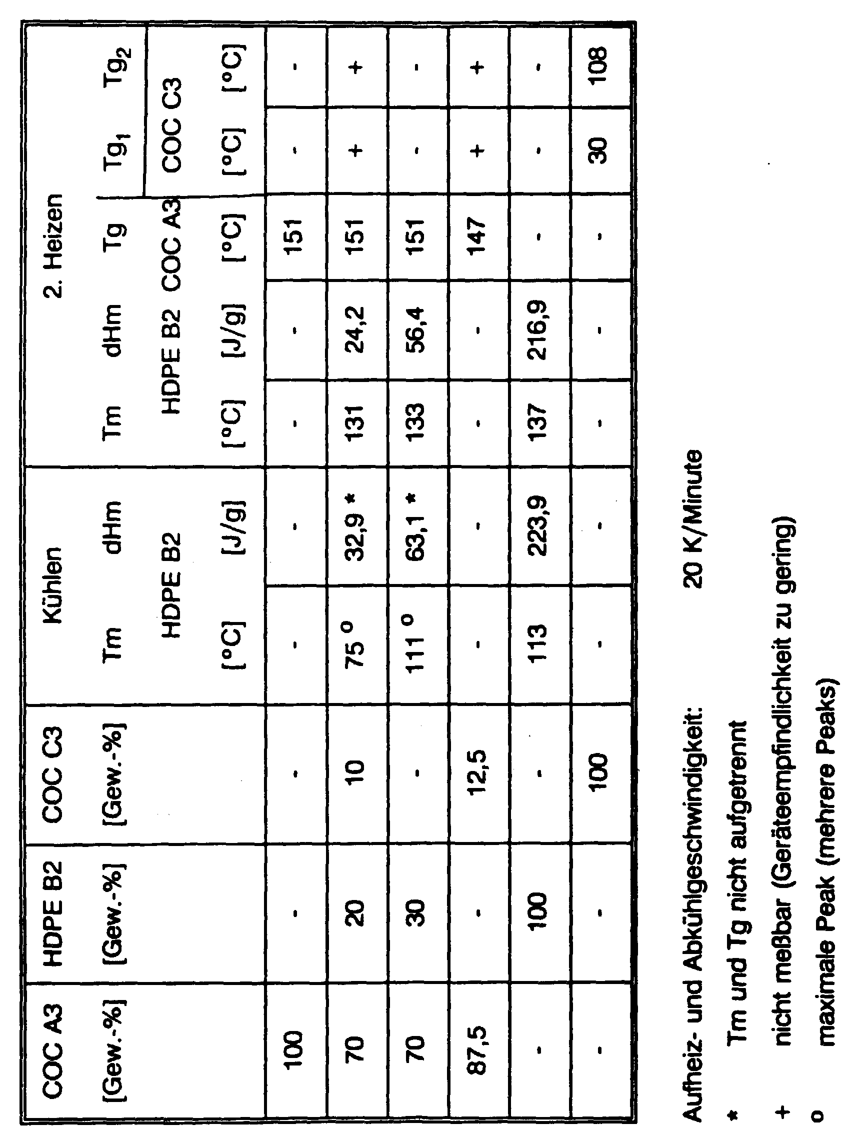

### Beispiel 9:

Mittels des Zweischneckenextruders wurden das Cycloolefincopolymere A3, das Polyethylen B2 und z. T. das Cycloolefinblockcopolymere C3 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zur Messung der Fließfähigkeiten verwendet. Diese sind in der nachfolgenden Tabelle aufgeführt.

| COC A3 [Gew.-%] | HDPE B2 [Gew.-%] | COC C3 [Gew.-%] | MVI 5 kg/220°C [cm³/10 Minuten] |
|---|---|---|---|
| 100 | - | - | 1,4 |
| 70 | 20 | 10/e | 4,1 |
| 70 | 30 | - | 8,7 |
| 87,5 | - | 12,5/e | 1,5 |
| - | 100 | - | 12,0 |
| - | - | 100 | 4,2 |

Die mit "e" bezeichneten Versuche sind erfindungsgemäß, die restlichen Vergleichsversuche.

### Beispiel 10:

Mittels des Zweischneckenextruders wurden das Cycloolefincopolymer A3, das Polyethylen B2 und z.T. das Cycloolefinblockcopolymer C3 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zu großen Schulterstäben spritzgegossen. Die nachstehende Tabelle zeigt die ermittelten Kugeldruckhärten.

| COC A3 [Gew.-%] | HDPE B2 [Gew.-%] | COC C3 [Gew.-%] | Kugeldruckhärte [N/mm²] |
|---|---|---|---|
| 100 | - | - | 182^{a} |
| 70 | 20 | 10/e | 122^{b} |
| 70 | 30 | - | 112^{b} |
| 87,5 | - | 12,5/e | 180^{a} |
| - | 100 | - | 50^{c} |
| - | - | 100 | 142^{b} |
| Die mit "e" bezeichneten Versuche sind erfindungsgemäß, die restlichen Vergleichsversuche. | | | |

| | | | |
|---|---|---|---|
| Prüfkraft: ^{a} 961 N | | | |
| ^{b} 358 N | | | |
| ^{c} 132 N | | | |

### Beispiel 11:

Mittels des Zweischneckenextruders wurden das Cycloolefincopolymere A3, das Polyethylen B2 und z.T. das Cycloolefinblockcopolymere C3 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zu Norm-Kleinstäben spritzgegossen. Die nachstehende Tabelle zeigt die ermittelten Schlagzähigkeiten.

| COC A3 [Gew.-%] | HDPE B2 [Gew.-%] | COC C3 [Gew.-%] | Schlagzähigkeit * | | | |
|---|---|---|---|---|---|---|
| | | | [J/m] | | [kJ/m²] | |
| | | | 25°C | 60°C | 25°C | 60°C |
| 100 | - | - | 35,2 | 35,0 | 5,9 | 5,8 |
| 70 | 20 | 10/e | 128,4 | 153,2 | 21,0 | 25,2 |
| 70 | 30 | - | 36,3 | 33,8 | 6,0 | 5,6 |
| 87,5 | - | 12,5/e | 78,6 | 123,3 | 12,9 | 20,2 |
| - | 100 | - | o.Br. | o.Br. | o.Br | o.Br. |
| o. Br. ohne Bruch | | | | | | |

| | | | | | | |
|---|---|---|---|---|---|---|
| * Auftreffgeschindigkeit des Hammers: 2,93 m/s | | | | | | |

Die mit "e" bezeichneten Versuche sind erfindungsgemäß, die restlichen Vergleichsversuche.

### Beispiel 12:

Mittels des Zweischneckenextruders wurden das Cycloolefincopolymer A5, das Polyethylen B3, das Polyethylen B4 (GUR) und z. T. das Cycloolefinblockcopolymer C4 (Phasenvermittler) in verschiedenen Gewichtsverhältnissen nach intensiver Trocknung gemeinsam unter Argonatmosphäre extrudiert und granuliert. Nachstehende Tabelle zeiqt die ermittelten thermischen Eigenschaften der Legierungen.

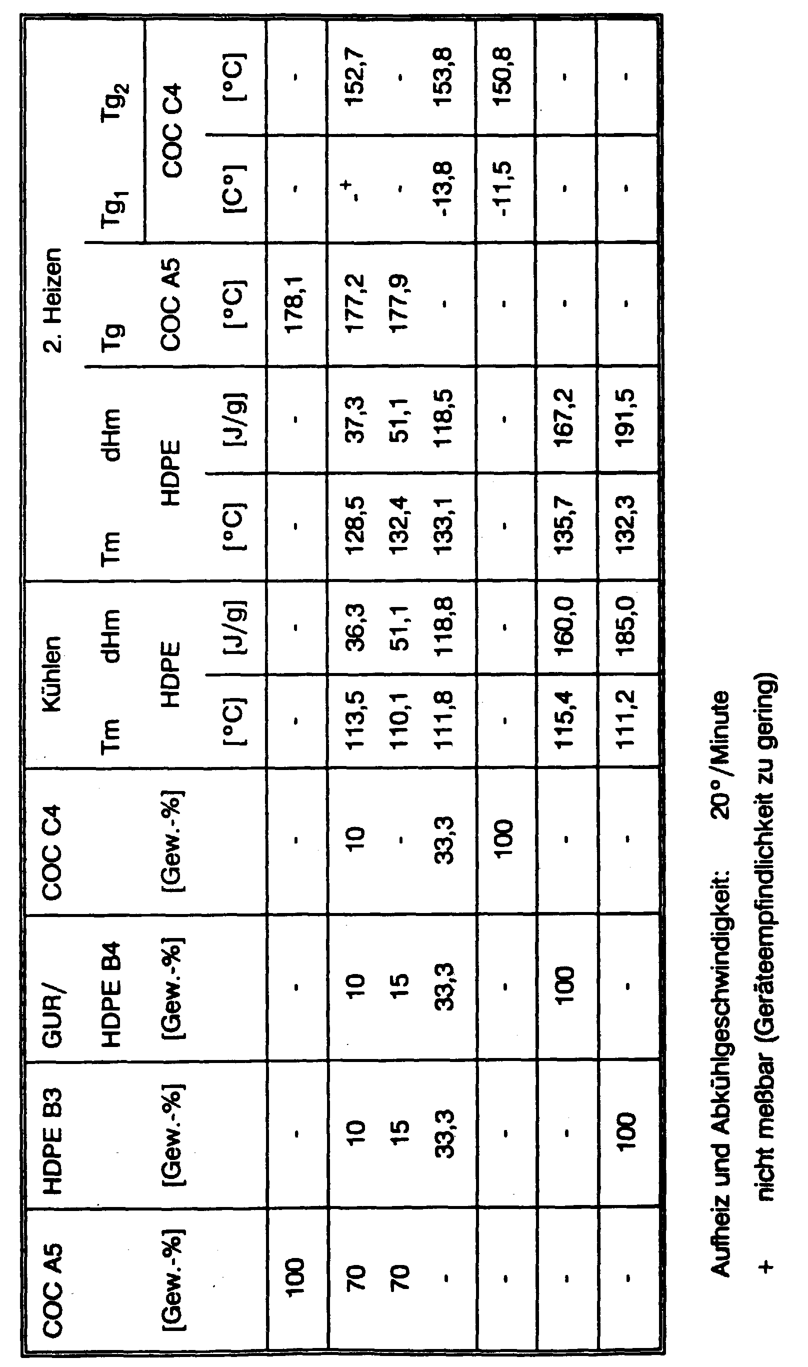

### Beispiel 13:

Mittels des Zweischneckenextruders wurden das Cycloolefincopolymer A5, das Polyethylen B3, das Polyethylen B4 (GUR) und z. T. das Cycloolefinblockcopolymer C4 (Phasenvermittler) in verschiedenen Gewichtsverhältnissen nach intensiver Trocknung gemeinsam unter Argonatmosphäre extrudiert und granuliert. Das Grunulat wurde nach intensiver Trocknung zu großen Schulterstäben spritzgegossen. Die nachstehende Tabelle zeigt die ermittelten Wärmeformbeständigkeiten.

| COC A5 [Gew.-%] | HDPE B3 [Gew.-%] | HDPE B4 GUR [Gew.-%] | COC C4 [Gew.-%] | HDT-(A/B) [°C] |
|---|---|---|---|---|
| 100 | - | - | - | 153 (A) |
| 70 | 10 | 10 | 10/e | 159 (B) |
| 70 | 15 | 15 | - | 157 (B) |
| - | 33,3 | 33,3 | 33,3/e | 40 (B) |
| - | - | - | 100 | zu weich |
| - | - | 100 | - | - |
| - | 100 | - | - | 59 (B) |

Formbeständigkeitstemperatur HDT-B: 0,45 MPa HDT-A: 1,80 MPa

Die mit "e" bezeichneten Versuche sind erfindungsgemäß, die restlichen Vergleichsversuche.

### Beispiel 14:

Mittels des Zweischneckenextruders wurden das Cycloolefincopolymer A5, das Polyethylen B3, das Polyethylen B4 und z. B. das Cycloolefinblockcopolymer C4 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zu großen Schulterstäben spritzgegossen. Die nachstehende Tabelle zeigt die ermittelten Kerbschlagzähigkeiten.

| COC A5 [Gew.-%] | HDPE B3 [Gew.-%] | HDPE B4 GUR [Gew.-%] | COC C4 [Gew.-%] | Izod-Kerbschlagzähigkeit [J/m] |
|---|---|---|---|---|
| 100 | - | - | - | 18 |
| 70 | 10 | 10 | 10/e | 36 |
| 70 | 15 | 15 | - | 26 |
| - | 33,3 | 33,3 | 33,3/e | 480 |
| - | - | - | 100 | o.Br. |
| - | - | 100 | - | o.Br. |
| - | 100 | - | - | 460 |
| o.Br.: ohne Bruch | | | | |

Die mit "e" bezeichneten Versuche sind erfindungsgemäß, die restlichen Vergleichsversuche.

### Beispiel 15:

Mittels des Zweischneckenextruders wurden das Cycloolefincopolymer A4, das Polypropylen B5 und z. T. das Cycloolefinblockcopolymer C4 (Phasenvermittler) in verschiedenen Gewichtsverhältnissen nach intensiver Trocknung gemeinsam unter Argonatmosphäre extrudiert und granuliert. Nachstehende Tabelle zeigt die ermittelten thermischen Eigenschaften der Legierungen.

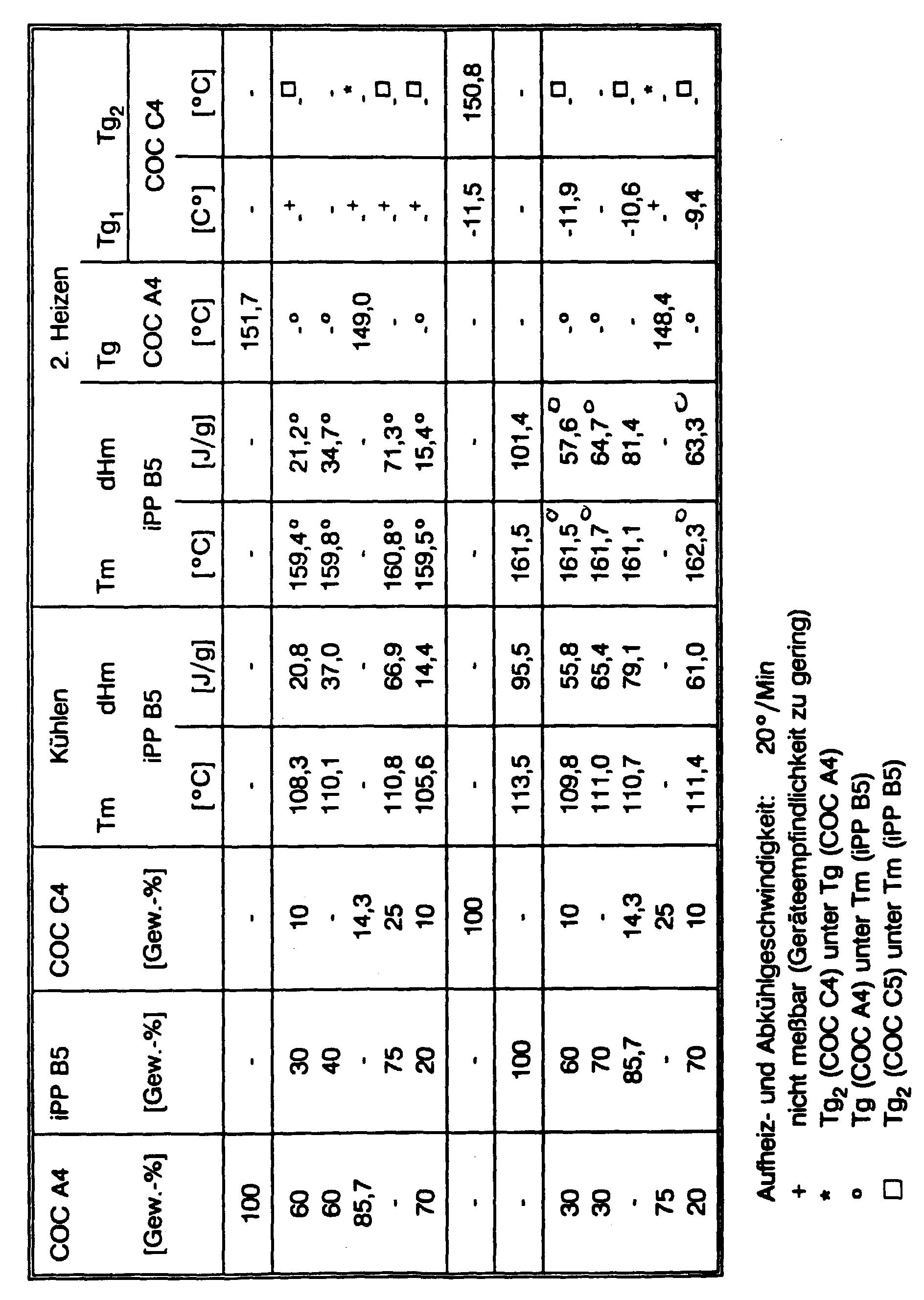

### Beispiel 16:

Mittels des Zweischneckenextruders wurden das Cycloolefincopolymer A4, das Polypropylen B5, und z. T. das Cycloolefinblockcopolyner C4 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zur Messung der Fließfähigkeiten verwendet. Diese sind in der nachfolgenden Tabelle aufgeführt.

| COC A4 [Gew.-%] | iPP B5 [Gew.-%] | COC C4 [Gew.-%] | MVI [ccm/10 min] |
|---|---|---|---|
| 100 | - | - | 1,8 |
| 60 | 30 | 10/e | 7,0 |
| 60 | 40 | - | 7,5 |
| 85,7 | - | 14,3/e | 3,3 |
| - | 75 | 25/e | 13 |
| 70 | 20 | 10/e | 5,6 |
| - | - | 100 | 20 |
| - | 100 | - | 6,3 |
| 30 | 60 | 10/e | 11 |
| 30 | 70 | - | 11 |
| - | 85,7 | 14,3/e | 11 |
| 75 | - | 25/e | 4,5 |
| 20 | 70 | 10/e | 12 |

Temperatur und Auflagegewicht: 230°C/10 Kg

Die mit "e" bezeichneten Versuche sind erfindungsgemäß, die restlichen Vergleichsversuche.

### Beispiel 17:

Mittels des Zweischneckenextruders wurden das Cycloolefincopolymer A4, das Polypropylen B5, und z. T. das Cycloolefinblockcopolymer C4 (Phasenvermittler) in verschiedenen Gewichtsverhältnissen nach intensiver Trocknung gemeinsam in Argonatmosphäre extrudiert und granuliert. Das Granulat wurde nach intensiver Trocknung zu Pressplatten verpreßt. Die nachstehende Tabelle zeigt die ermittelten mechanischen Daten der Legierungen beim Torsionspendelversuch.

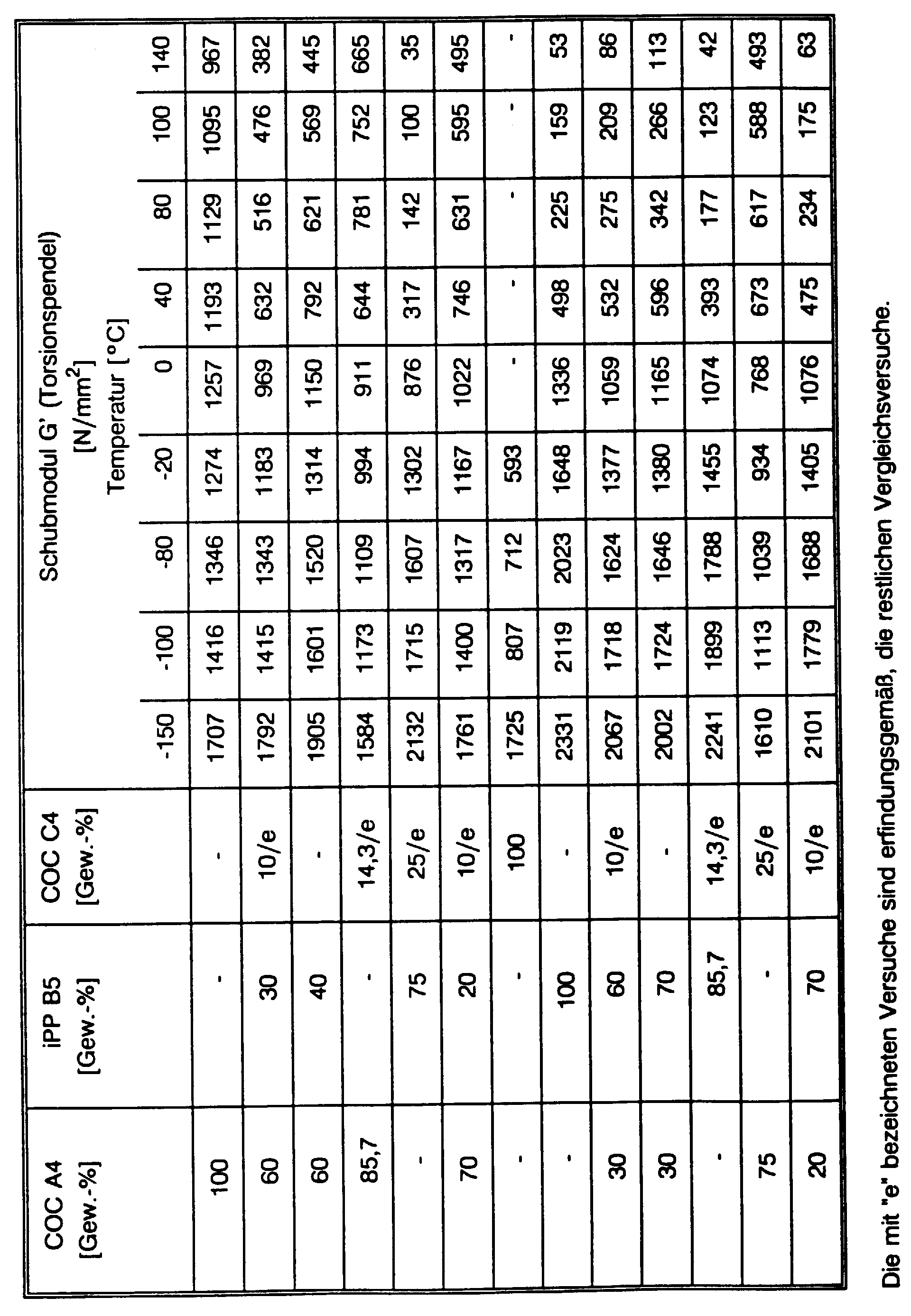

### Beispiel 18:

Mittels des Zweischneckenextruders wurden das Cycloolefincopolymer A4, das Polypropylen B5, und z. T. das Cycloolefinblockcopolymer C4 (Phasenvermittler) in verschiedenen Gewichtsverhältnissen nach intensiver Trocknung gemeinsam unter Argonatmosphäre extrudiert und granuliert. Das Granulat wurde nach intensiver Trocknung zu großen Schulterstäben spritzgegossen. Die nachstehende Tabelle zeigt die ermittelten Izod Kerbschlagzähigkeiten und Reißdehnungen.

| COC A4 [Gew.-%] | iPP B5 [Gew.-%] | COC C4 [Gew.-%] | Izod Kerbschlagzähigkeit | | Reißdehn. [%] |
|---|---|---|---|---|---|
| | | | [J/m] | [kJ/m²] | |
| 100 | - | - | 17 | 2,1 | 3,6 |
| 60 | 30 | 10/e | 30 | 3,8 | 24 |
| 60 | 40 | - | 15 | 1,9 | 3,6 |
| 85,7 | - | 14,3/e | 35 | 4,4 | 31 |
| - | 75 | 25/e | n.g. | n.g. | 362* |
| 70 | 20 | 10/e | 19 | 2,4 | 4,6 |
| - | - | 100 | o.Br. | o.Br. | >75 |
| - | 100 | - | 65 | 8,1 | 500* |
| 30 | 60 | 10/e | 26 | 3,2 | 20* |
| 30 | 70 | - | 23 | 2,9 | 8,8 |
| - | 85,7 | 14,3/e | 414 | 52 | 52 |
| 75 | - | 25/e | 48 | 6,0 | 41 |
| 20 | 70 | 10/e | 49 | 6,2 | 51* |

| | | | | | |
|---|---|---|---|---|---|
| * gemessen an Preßplatten n.g. nicht gemessen o.Br. ohne Bruch | | | | | |

## Patentansprüche

1. Verfahren zur Herstellung einer Polymerlegierung wobei man feinteilige Cycloolefinpolymere und feinteilige Polyolefine sowie mindestens ein Blockpolymer vereinigt und man die Mischung bei erhöhter Temperatur und Einwirken von Scherkräften zu einer Polymerlegierung verarbeitet, wobei man zur Herstellung der Blockcopolymeren 0,1 bis 95 Gew.-%, bezogen auf die Gesamtmenge der Monomeren, mindestens eines Monomers der Formeln I, II, III, IV, V oder VI 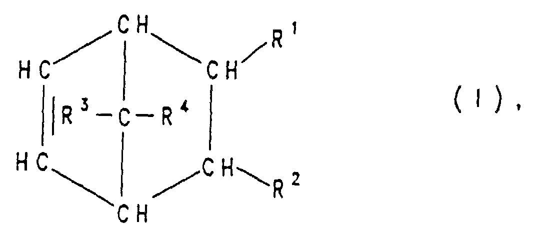 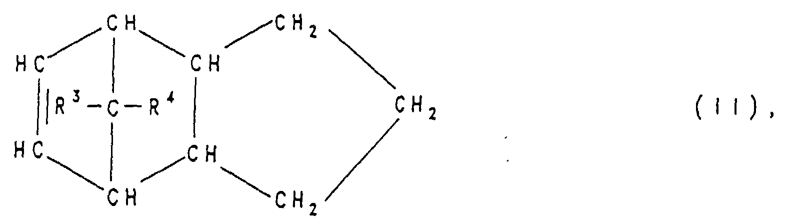 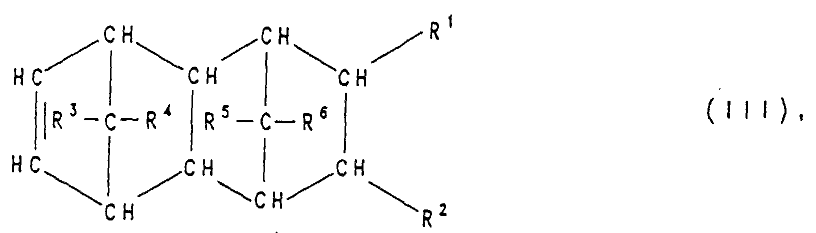 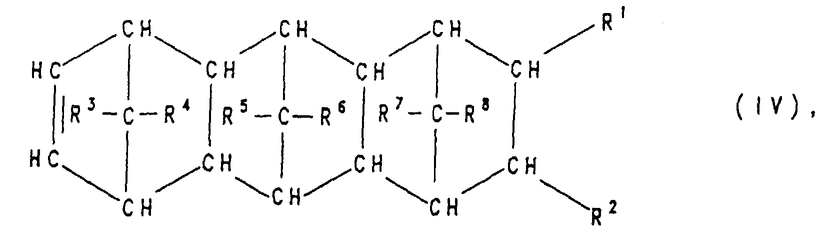 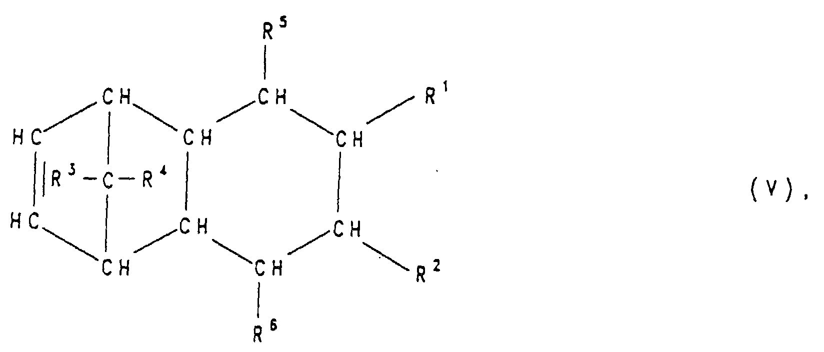 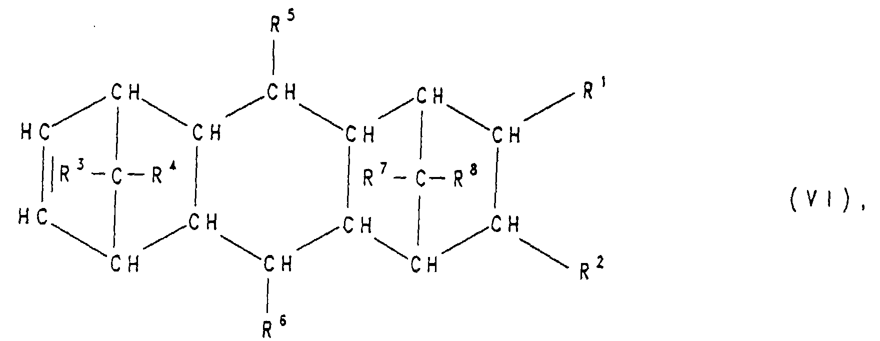 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, und 0 bis 95 Gew.-%, bezogen auf die Gesamtmenge der Monomeren, eines Cycloolefins der Formel VII 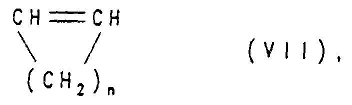 worin n eine Zahl von 2 bis 10 ist, und
0 bis 99 Gew.-%, bezogen auf die Gesamtmenge der Monomeren, mindestens eines acyclischen Olefins der Formel VIII 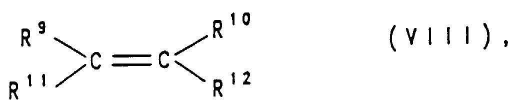 worin R⁹, R¹⁰, R¹¹ und R¹² gleich oder verschieden sind und ein Wasserstoffatom oder einen
C₁-C₈-Alkylrest bedeuten, bei Temperaturen von -78 bis 150°C und einem Druck von 0,01 bis 64 bar, in Gegenwart eines Katalysators polymerisiert, welcher aus einem Cokatalysator und einem Metallocen besteht und man bei einer Molekulargewichtsverteilung M_{w}/Mₙ kleiner 2 des sich bildenden Block-Polymers einmal oder mehrmals die Reaktionsbedingungen derart verändert, daß sich das Monomer-Comonomer-Verhältnis um mindestens 10 % verändert oder man zu dem Monomer oder den Monomeren ein weiteres polymerisierbares Monomer der Formeln I - VIII zudosiert,
man das erhaltene Blockpolymere isoliert, man 0,1 - 99 Gew.-Teile mindestens eines Blockcopolymeren, 0 - 95 Gew.-Teile feinteiliges Polyolefin oder Polyolefinen und 0 - 95 Gew.-Teile eines feinteiligen Cycloolefinpolymer oder -polymeren das, bzw. die mindestens eines der Monomere I, II, III, IV, V, VI oder VII sowie mindestens ein acyclisches Olefin VIII enthält, bzw. enthalten aber kein Blockcopolymer darstellt, bzw. darstellen, vereinigt, wobei die Summe der Polymeren 100 Gew.-Teile beträgt, man gegebenenfalls Additive hinzufügt, mischt und man die Mischung bei erhöhter Temperatur unter Einwirkung von Scherkräften zu einer Polymerlegierung verarbeitet.

2. Verfahren gemäß Anspruch 1, wobei man mindestens ein feinteiliges aliphatisches Poly-1-olefin als Polyolefin einsetzt.

3. Verfahren gemäß Anspruch 2, wobei man mindestens ein feinteiliges Polyethylen als Polyolefin einsetzt.

4. Verfahren gemäß Anspruch 2, wobei man 1 - 55 Gew.-Teile mindestens eines Blockpolymeren, 10 - 80 Gew.-Teile Polyolefin oder Polyolefine und 10 - 80 Gew.-Teile Cycloolefinpolymer oder -polymere vereinigt und verarbeitet, mit der Maßgabe, daß die Summe der Polymeren 100 Gew.-Teile beträgt.

5. Verfahren gemäß Anspruch 2, wobei man ein Gewichtsverhältnis Polyolefin oder Polyolefine/Blockcopolymer oder Blockcopolymere von mindestens 1:1 einhält.

6. Verfahren gemäß Anspruch 3, wobei man 0 - 50 Gew.-Teile eines feinteiligen Polyethylens oder mehrerer feinteiliger Polyethylene einsetzt.

7. Verfahren gemäß Anspruch 3, wobei man HDPE als Polyethylen einsetzt.

8. Verfahren nach Anspruch 1, wobei man bei der Polymerisation ein Metallocen der Formel XI 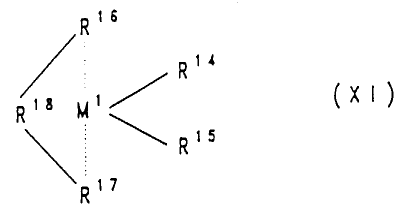 worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eineC₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ einen ein- oder mehrkemigen Kohlenwasserstoffrest, welcher mit dem Zentralatom M¹ eine Sandwichstruktur bilden kann,
bedeuten,
R¹⁸ 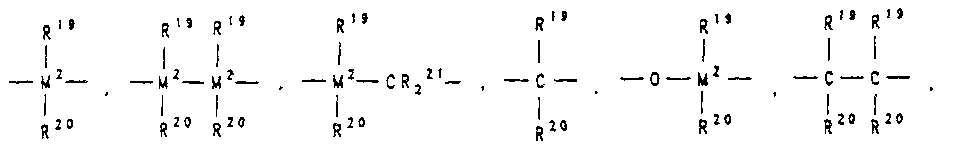 = BR ¹⁹, = AIR¹⁹, -Ge-, -Sn-, -O-, -S-, = SO, = SO₂, = NR¹⁹, = CO, = PR¹⁹, oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈,C₄₀-Arylalkenylgruppe oder eine C₇-C₄₀-Alkylarylgruppe bedeuten oder R¹⁹ und R²⁰ oder R^{l9} und R²¹ jeweils mit den sie verbindenden Atomen einen Ring bilden, und
M² Silizium, Germanium oder Zinn ist,
einsetzt.

9. Polymerlegierung erhältlich nach dem Verfahren von Anspruch 1.

10. Verwendung der Polymerlegierung gemäß Anspruch 9 als Matrixmaterial für Verbundwerkstoffe oder zur Herstellung von Formkörpern.

11. Verfahren gemäß Anspruch 2, wobei man als feinteiliges Polyolefin mindestens ein feinteiliges polypropylen einsetzt.

12. Verfahren gemäß Anspruch 11, wobei man feinteiliges isotaktisches polypropylen als feinteiliges Polypropylen einsetzt.

## Claims

1. A process for preparing a polymer blend by combining finely particulate cycloolefin polymers and finely particulate polyolefins and also at least one block polymer and processing the mixture at elevated temperature and under the action of shearing forces into a polymer blend, which comprises, in order to prepare the block copolymers, polymerizing from 0.1 to 95 % by weight, based on the total amount of the monomers, of at least one monomer of the formulae I, II, III, IV, V or VI 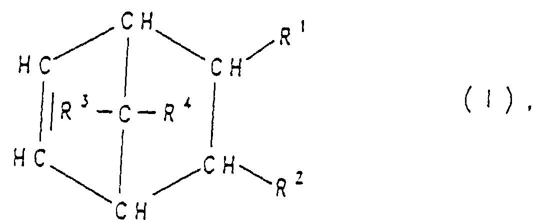 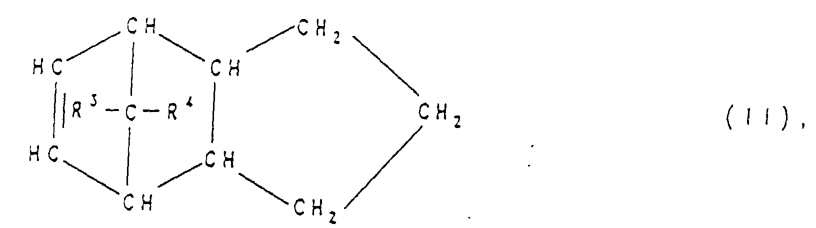 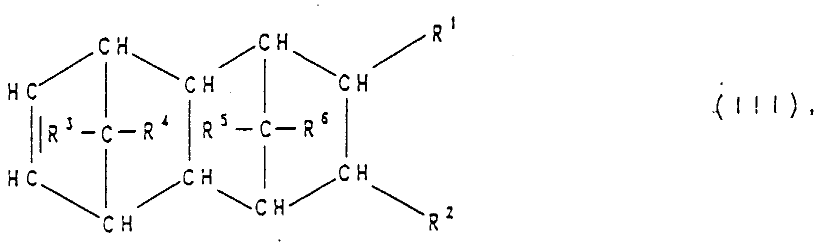 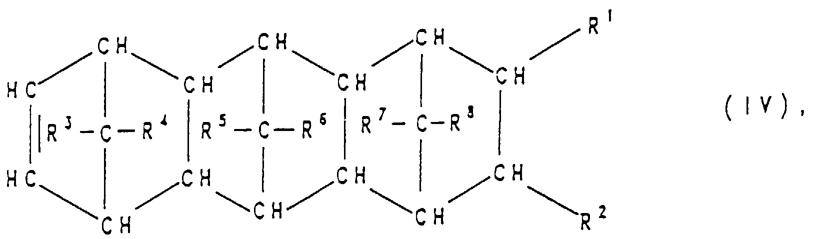 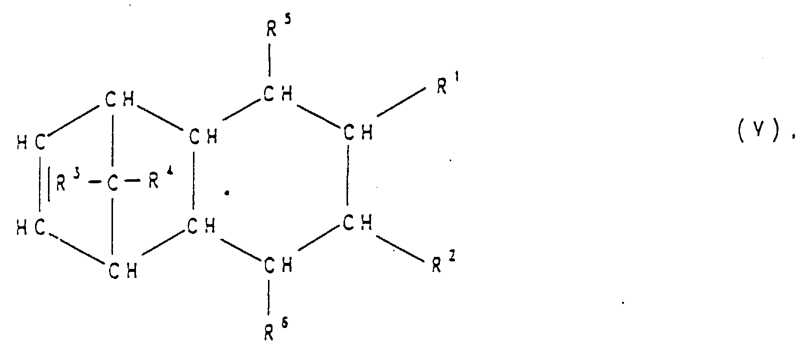 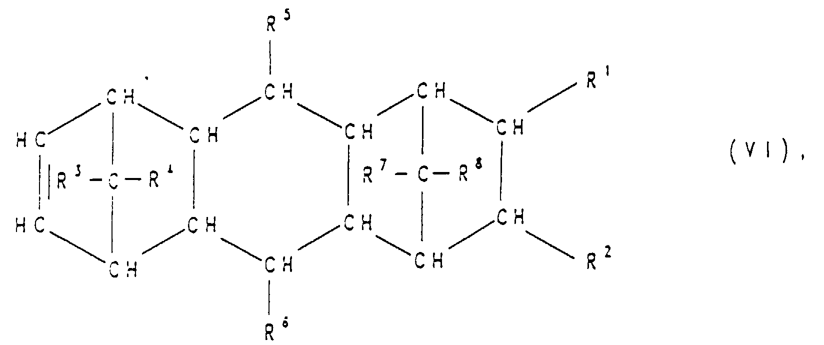 where R¹, R², R³, R⁴, R⁵, R⁶, R⁷ and R⁸ are the same or different and are a hydrogen atom or a C₁-C₈-alkyl radical, the same radicals in the various formulae being able to be different, and from 0 to 95 % by weight, based on the total amount of the monomers, of a cycloolefin of the formula VII 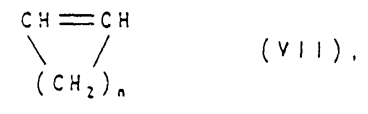 where n is a number from 2 to 10, and from 0 to 99 % by weight, based on the total amount of the monomers, of at least one acyclic olefin of the formula VIII 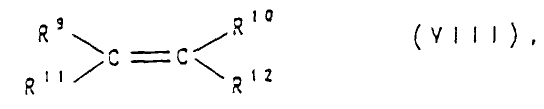 where R⁹, R¹⁰, R¹¹ and R¹² are the same or different and are a hydrogen atom or a C₁-C₈-alkyl radical, at temperatures of from -78 to 150°C and at a pressure of from 0.01 to 64 bar, in the presence of a catalyst comprising a cocatalyst and a metallocene, and changing the reaction conditions one or more times at a molecular weight distribution M_{w}/Mₙ of less than 2, of the block polymer that is being formed, in such a way that the monomer-comonomer ratio changes by at least 10 %, or metering a further polymerizable monomer of the formulae I - VIII into the monomer or monomers, isolating the block polymer obtained, combining from 0.1 to 99 parts by weight of at least one block copolymer, from 0 to 95 parts by weight of finely particulate polyolefin or polyolefins and from 0 to 95 parts by weight of a finely particulate cycloolefin polymer or polymers which comprises or comprise at least one of the monomers I, II, III, IV, V, VI or VII and also at least one acyclic olefin VIII but is or are not a block copolymer, the sum of the polymers totalling 100 parts by weight, incorporating additives if desired, mixing the components together, and processing the mixture at elevated temperature under the action of shearing forces to form a polymer blend.

2. The process as claimed in claim 1, wherein at least one finely particulate aliphatic poly-1-olefin is used as polyolefin.

3. The process as claimed in claim 2, wherein at least one finely particulate polyethylene is used as polyolefin.

4. The process as claimed in claim 2, wherein from 1 to 55 parts by weight of at least one block polymer, from 10 to 80 parts by weight of polyolefin or polyolefins and from 10 to 80 parts by weight of cycloolefin polymer or polymers are combined and processed, with the proviso that the sum of the polymers totals 100 parts by weight.

5. The process as claimed in claim 2, wherein a weight ratio of polyolefin or polyolefins to block copolymer or block copolymers of at least 1:1 is maintained.

6. The process as claimed in claim 3, wherein from 0 to 50 parts by weight of one or more finely particulate polyethylenes are used.

7. The process as claimed in claim 3, wherein HDPE is used as polyethylene.

8. The process as claimed in claim 1, wherein in the polymerization a metallocene of the formula XI is used 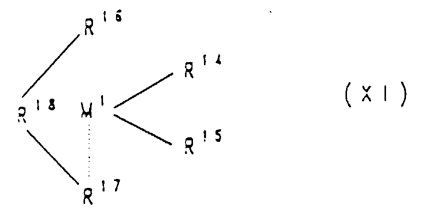 where
M¹ is titanium, zirconium, hafnium, vanadium, niobium or tantalum,
R¹⁴ and R¹⁵ are the same or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are a mononuclear or polynuclear hydrocarbon radical which together with the central atom M¹ can form a sandwich structure,
R¹⁸ is 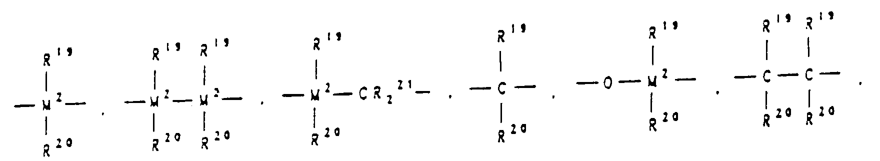 = BR¹⁹, = AIR¹⁹, -Ge-, -Sn- , -O- , -S- , = SO, = SO₂, = NR¹⁹, = CO, = PR¹⁹, or = P(O)R¹⁹, where R¹⁹, R²⁰ and R²¹ are the same or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁹ and R²⁰ or R¹⁹ and R²¹ in each case form a ring with the atoms that connect them, and
M² is silicon, germanium or tin.

9. A polymer blend obtainable by the process of claim 1.

10. The use of the polymer blend of claim 9 as a matrix material for composites or for the production of moldings.

11. The process as claimed in claim 2, wherein at least one finely particulate polypropylene is used as finely particulate polyolefin.

12. The process as claimed in claim 11, wherein finely particulate isotactic polypropylene is used as finely particulate polypropylene.

## Revendications

1. Procédé pour préparer un alliage de polymères, dans lequel on combine des polymères cyclooléfiniques finement divisés et des polyoléfines finement divisées, et au moins un polymère séquence, et on met en oeuvre le mélange à haute température et sous l'action de forces de cisaillement pour obtenir un alliage de polymères, procédé dans lequel, pour préparer les copolymères séquencés, on polymérise une quantité de 0,1 à 95 % en poids, par rapport à la quantité totale des monomères, d'au moins un monomère de formules I, II, III, IV, V ou VI : 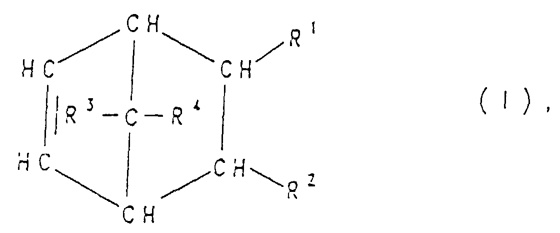 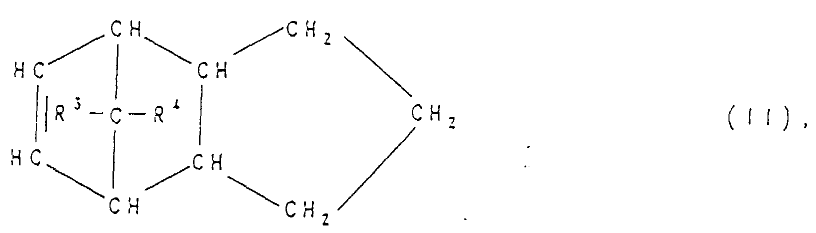 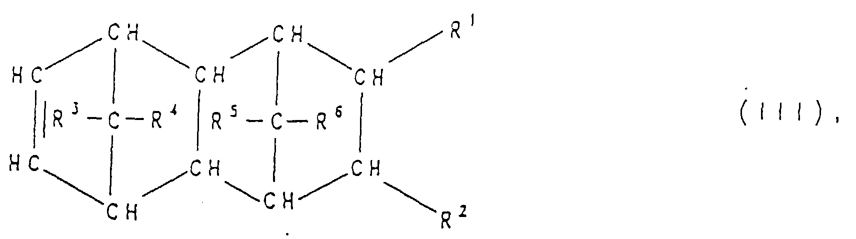 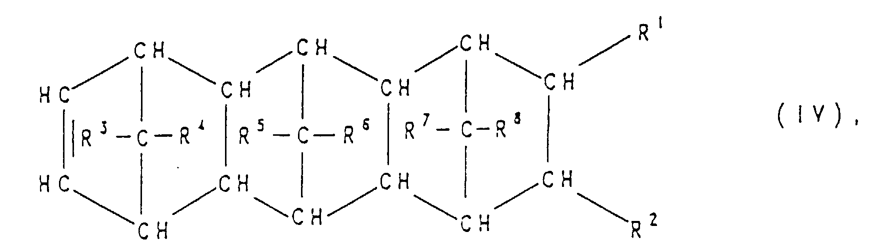 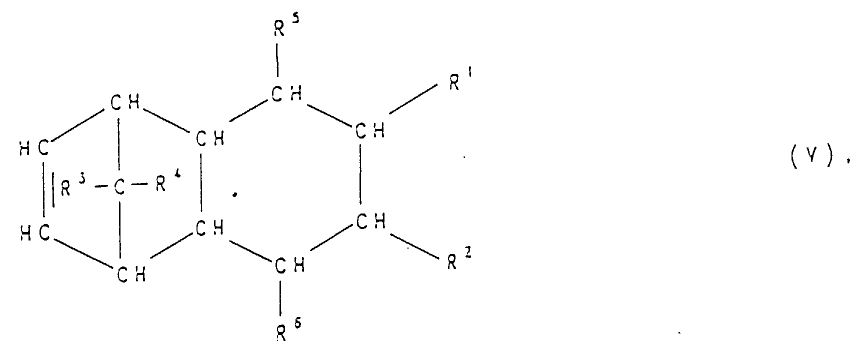 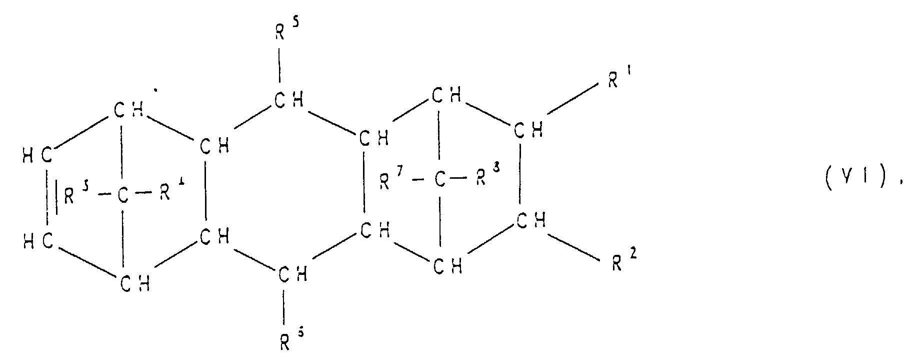 où R¹, R², R³, R⁴, R⁵, R⁶, R⁷ et R⁸ sont identiques ou différents et représentent chacun un atome d'hydrogène ou un groupe alkyle en C₁-C₈, des radicaux identiques, dans les différentes formules, pouvant avoir des significations différentes,
et de 0 à 95 % en poids, par rapport à la quantité totale des monomères, d'une cyclooléfine de formule VII : 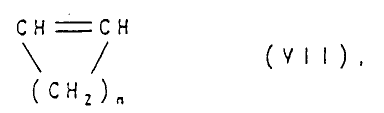 dans laquelle n est un nombre de 2 à 10, et
de 0 à 99 % en poids, par rapport à la quantité totale des monomères, d'au moins une oléfine acyclique de formule VIII : 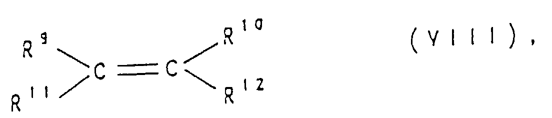 dans laquelle R⁹, R¹⁰ , R¹¹ et R¹² sont identiques ou différents et représentent chacun un atome d'hydrogène ou un groupe alkyle en C₁-C₈, à des températures de -78 à 150°C et sous une pression de 0,01 à 64 bar, en présence d'un catalyseur constitué d'un cocatalyseur et d'un métallocène, et, pour une répartition des masses moléculaires M_{w}/Mₙ < 2 du polymère séquencé en cours de formation, on modifie en une fois ou en plusieurs fois les conditions de la réaction de façon que le rapport du monomère au comonomère subisse une variation d'au moins 10 %, ou encore on ajoute au monomère ou aux monomères, un monomère polymérisable additionnel de formules I à VII, on isole le polymère séquencé obtenu, on combine 0,1 à 99 parties en poids d'au moins un copolymère séquencé, de 0 à 95 parties en poids d'une ou plusieurs polyoléfines finement divisées et de 0 à 95 parties en poids d'un ou plusieurs polymères cyclooléfiniques finement divisés contenant au moins l'un des monomères I, II, III, IV, V, VI ou VII ainsi qu'au moins une oléfine acyclique VIII, mais ne représentant pas un copolymère séquence, la somme des polymères étant de 100 % en poids, on ajoute éventuellement des additifs, on mélange et on met en oeuvre le mélange, à haute température et sous l'action de forces de cisaillement, pour obtenir un alliage de polymères.

2. Procédé selon la revendication 1, dans lequel on utilise comme polyoléfine au moins une poly-l-oléfine aliphatique finement divisée.

3. Procédé selon la revendication 2, dans lequel on utilise comme polyoléfine au moins un polyéthylène finement divisé.

4. Procédé selon la revendication 2, dans lequel on combine et met en oeuvre de 1 à 55 parties en poids d'au moins un polymère séquencé, de 10 à 80 parties en poids d'une ou plusieurs polyoléfines et de 10 à 80 parties en poids d'un ou plusieurs polymères cyclooléfiniques, du moment que la somme des quantités des polymères est de 100 parties en poids.

5. Procédé selon la revendication 2, dans lequel on maintient un rapport pondéral de la ou des polyoléfines au ou aux copolymères séquencés d'au moins 1:1.

6. Procédé selon la revendication 3, dans lequel on utilise de 0 à 50 parties en poids d'un polyéthylène finement divisé ou de plusieurs polyéthylènes finement divisés.

7. Procédé selon la revendication 3, dans lequel on utilise le PEHD comme polyéthylène.

8. Procédé selon la revendication 1, dans lequel, lors de la polymérisation, on utilise un métallocène de formule XI : 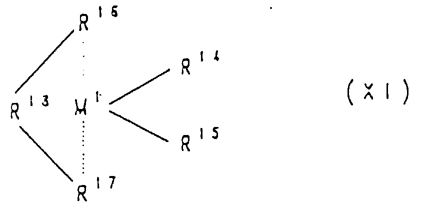 dans laquelle :
M¹ est le titane, le zirconium, le hafnium, le vanadium, le niobium ou le tantale,
R¹⁴ et R¹⁵ sont identiques ou différents et représentent chacun un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe alkylalcényle en C₈-C₄₀,
R¹⁶ et R¹⁷ représentent chacun un radical hydrocarboné mono- ou polynucléaire, qui peut avec l'atome de central M¹ former une structure sandwich,
R¹⁸ est : 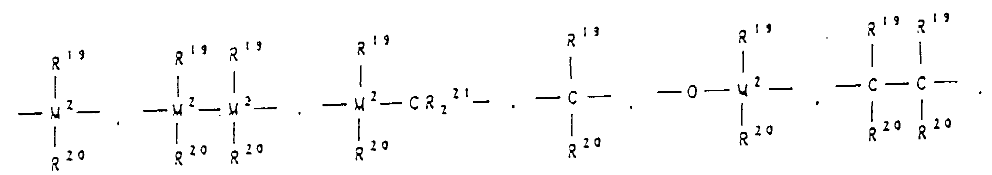 =BR¹⁹, =AlR¹⁹, -Ge-, -Sn-, -O-, -S-,=SO, =SO₂, =NR¹⁹, =CO, =PR¹⁹, ou =P(O)R¹⁹, où R¹⁹, R²⁰ et R²¹ sont identiques ou différents et représentent chacun un atomes d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou encore R¹⁹ et R²⁰, ou R¹⁹ et R²¹, forment un noyau avec les atomes qui les relient, et
M² est le silicium, le germanium ou l'étain.

9. Alliage de polymères pouvant être obtenu par le procédé selon la revendication 1.

10. Utilisation de l'alliage de polymères selon la revendication 9 comme matériau de matrice pour composites ou pour fabriquer des objets moulés.

11. Procédé selon la revendication 2, dans lequel on utilise comme polyoléfine finement divisée au moins un polypropylène finement divisé.

12. Procédé selon la revendication 11, dans lequel on utilise comme polypropylène finement divisé un polypropylène isotactique finement divisé.
